(19) Europäisches Patentamt
European Patent Office
Office européen des brevets

(11) EP 3 549 990 A1

(12) **EUROPÄISCHE PATENTANMELDUNG**

(43) Veröffentlichungstag:
**09.10.2019 Patentblatt 2019/41**

(21) Anmeldenummer: **18165622.4**

(22) Anmeldetag: **04.04.2018**

(51) Int Cl.:
***C09D 133/06*** *(2006.01)* ***C08G 18/61*** *(2006.01)*
***C08G 18/62*** *(2006.01)* ***C09D 175/04*** *(2006.01)*
***C08G 18/40*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **ZWEI-KOMPONENTEN-SYSTEM MIT VERBESSERTER HAFTUNG**

(57) Es werden Zwei-Komponenten-Systeme, ein Verbundbauteil, welches eine Beschichtung aus dem Zwei-Komponenten-System umfasst, ein Verfahren zur Herstellung eines Verbundbauteils und eine Verwendung spezieller siloxanhaltiger Verbindungen beschrieben. Dabei führt der Zusatz einer polysiloxanhaltigen Komponente, entweder chemisch eingebunden in die (Meth)acrylatkomponente oder physikalisch eingemischt in diese Komponente, zu einer verbesserten Haftung gegenüber einem thermoplastischen Träger.

EP 3 549 990 A1

## Beschreibung

Gegenstand der vorliegenden Erfindung ist ein Zwei-Komponenten-System, ein Verbundbauteil, welches eine Beschichtung aus dem Zwei-Komponenten-System umfasst, ein Verfahren zur Herstellung eines Verbundbauteils und eine Verwendung spezieller siloxanhaltiger Verbindungen.

Bindemittel für moderne Lacksysteme müssen eine Vielzahl von Anforderungen erfüllen. So müssen sie auf der einen Seite bestimmte lacktechnische Eigenschaften wie Kratzfestigkeit, Deckvermögen und Wetterbeständigkeit aufweisen, andererseits sollte eine gute Verarbeitbarkeit, eine wirtschaftliche Herstellung und die Erfüllung gesetzlicher Auflagen gewährleistet sein.

Aufgrund der VOC-Problematik sind lösemittel- und abspalterfreie Polyurethan-Systeme von großem Interesse, da sie nach Applikation weitgehend ohne Emission flüchtiger Bestandteile ausgehärtet werden können. Außerdem können auf diese Weise Träger beschichtet werden, die lösemittelempfindlich sind. Lösemittelfreie Bindemittelgemische sind vor allem bei Dickschichtanwendungen gefragt, sowohl aus ökologischen Gründen aber auch weil die vollständige Emission des Lösemittels unter gleichzeitiger Bildung einer homogenen, blasenfreien Schicht nicht möglich ist.

Massive beschichtete Formteile können nach allgemein bekannten Verfahren wie RIM (**R**eaction-**I**njection-**M**olding) hergestellt werden. Besonders vorteilhaft zur Herstellung von den oben beschriebenen Dickschichten (Beschichtungen mit hoher Schichtstärke) ist das sogenannte **I**n-**M**ould-**C**oating (IMC). Hier werden die Beschichtungskomponenten auf den entsprechenden Träger in einem Formwerkzeug aufgetragen und in der Werkzeugkavität ausgehärtet. Neben den oben genannten Anforderungen sind die großen Vorteile der IMC-Technik die schnellen Verarbeitungszeiten, ein geringer bis niedriger Verlust an Rohstoffen sowie die Herstellung eines beschichteten Spritzgussformteils (Verbundbauteils) inklusive Beschichtung in einem Arbeitsgang.

In der EP 0 943 637 A1 werden beispielsweise Systeme zur Anwendung in RIM-Verfahren beschrieben, welche zu transparenten Polyurethan-Beschichtungen führen. Hier wird eine Polyol-Komponente auf Basis von Polyether- und / oder Polyesterpolyolen mit einer mittleren Funktionalität >3 und einer mittleren Hydroxyzahl von 300 bis 950 mgKOH/g verwendet. Die Wahl von Polyethern und / oder Polyestern als Polyolkomponente in solchen Anwendungen ist meist durch ihre niedrige Viskosität bedingt. Dabei sind Polyetherpolyole jedoch in Bezug auf die Eigenschaft der Lichtechtheit weniger gut geeignet. Je nach Anwendung ist die Chemikalien-, Lösungsmittel- und Wetterbeständigkeit von Polyesterpolyolen jedoch optimierungsbedürftig.

Auch die EP 1 484 350 A2 offenbart lösemittelfreie Zwei-Komponenten-Systeme zur Verwendung im RIM- oder IMC-Verfahren. Auch hier werden als Polyolkomponente Polyesterpolyole eingesetzt.

EP 0 693 512 A1 beschreibt lichtechte abriebfeste und lösemittelfreie Polyurethanbeschichtungen von Mischungen aus HDI-Polyisocyanaten mit Isocyanurat-Polyisocyanaten auf Basis cycloaliphatischer Diisocyanate. Als Polyolkomponenten werden hier Polyester, Polyether, Polycarbonate oder Polyestercarbonate sowie Ricinusöl und Derivate verwendet.

In der EP 0 006 517 A1 werden Polyole beschrieben, welche durch Kondensation von hydroxyfunktionellen Polyacrylatharzen mit reaktiven Polyestern und / oder Alkydharzen in Gegenwart von Alkoxygruppen enthaltenden Polysiloxan erhalten werden. Dabei erfolgt die Einkondensation des Polysiloxans zur Verbesserung der Bewitterungsbeständigkeit der resultierenden Beschichtung. Es wird beschrieben, dass eine Verdünnung mit üblichen Lösungsmitteln notwendig ist, um die für die Weiterverarbeitung notwendigen Viskositäten einzustellen. In den Beispielen werden 50 %ige Lösungen in Xylol hergestellt.

Ebenso werden in der EP 1 247 823 A2 lösemittelhaltige Bindemittel beschrieben, welche durch Polymerisation einer Polyesterkomponente und einer Acrylatkomponente erhalten werden. Dabei wird die Polyesterkomponente hergestellt unter anderem unter Einkondensierung eines methoxyfunktionellen Polysiloxans.

In der WO 2015/039837 A1 werden Bindemittel auf Basis eines hydroxyfunktionellen Acrylatharzes, eines Alkoxy- und / oder Silanol-funktionellen Polysiloxans, einer oder mehrerer Di- oder Polycarbonsäuren und einem oder mehreren Di- oder Polyolen offenbart, welche alle im Bindemittel miteinander kondensiert vorliegen. Die chemische Anbindung der Polyole und der OH-funktionellen Polyacrylate erfolgt über die Alkoxy- oder Silanolgruppen des Polysiloxans unter Ausbildung einer Si-O-C-Bindung. Auch dieses Bindemittel ist lösemittelhaltig.

EP 0 550 259 A1 beschreibt lösemittelhaltige, acrylatbasierte Harze. Dabei wird eine mindestens difunktionelle Siloxankomponente mit in das Harz einpolymerisiert. Diese Siloxankomponente weist mindestens eine 3-Acryloxypropyl-Gruppe auf, um mit Vinylmonomeren copolymerisiert werden zu können. Des Weiteren weist diese Siloxankomponente zwingend mindestens eine weitere funktionelle Gruppe auf, welche gegenüber Isocyanatgruppen reaktiv ist und somit die Vernetzungseigenschaften des Harzes optimiert.

Damit sind aus dem Stand der Technik zum einen lösemittelfreie Systeme auf Basis von Polyether- oder Polyesterpolyolen bekannt oder aber lösemittelhaltige Systeme auf Basis von Acrylaten.

Werden die lösemittelfreien Systeme in einem IMC-Verfahren eingesetzt, so wird aus diesen Systemen eine Beschichtung auf einem Träger ausgebildet. Hierbei ist es besonders wünschenswert, dass die Haftung zwischen dieser Beschichtung und dem Träger optimal ist. Keines der genannten Dokumente untersucht die Haftung der resultierenden

Beschichtungen auf einem Träger.

In der WO 2015/055719 A1 und der US2011/0159292 A1 hingegen wird die Optimierung des Trägers, welcher in einem IMC-Verfahren eingesetzt werden kann, beschrieben, um eine verbesserte Haftung gegenüber einem allgemeinen Polyurethanlack aufzuweisen.

Der vorliegenden Erfindung lag daher die Aufgabe zugrunde ein Zwei-Komponenten-System bereitzustellen, welches für Dickschichtbeschichtungen nutzbar ist und bei dem mindestens ein Nachteil des Stands der Technik verbessert wird. Insbesondere lag der vorliegenden Erfindung die Aufgabe zu Grunde, ein Zwei-Komponenten-System bereitzustellen, welches für Dickschichtbeschichtungen nutzbar ist und gleichzeitig eine verbesserte Haftung auf einem thermoplastischen Träger, bevorzugt Polycarbonat, aufweist. Dabei bedeutet "Dickschichtbeschichtungen" bevorzugt, dass Schichten mit einer Schichtdicke von 1 bis 1000 μm, besonders bevorzugt 70 bis 500 μm, ganz besonders bevorzugt 90 bis 400 μm blasenfrei erhalten werden können. Insbesondere sollen die Zwei-Komponenten-Systeme geeignet sein für die Anwendung in einem RIM- und / oder IMC-Verfahren. Dabei sind die Zwei-Komponenten-Systeme weiterhin bevorzugt lösemittelfrei.

Mindestens eine, bevorzugt alle der oben genannten Aufgaben wurden durch die vorliegende Erfindung gelöst. Überraschend wurde gefunden, dass ein Zwei-Komponenten-System mit einer Polyolkomponente auf Basis von (Meth)acrylaten dann eine verbesserte Haftung auf einem thermoplastischem Träger, bevorzugt Polycarbonat, aufweist, wenn die Polyolkomponente ausschließlich primäre Hydroxygruppen aufweist und gleichzeitig mindestens eine spezielle Polysiloxan-Komponente anwesend ist.

Daher wird gemäß der vorliegenden Erfindung ein Zwei-Komponenten-System bereitgestellt, umfassend die Komponenten A) und B), wobei

A) mindestens eine (Meth)acrylatkomponente auf Basis von (Meth)acrylatmonomeren ist, welche durch Umsetzung der (Meth)acryleinheiten mindestens der Komponenten A1) und A2) hergestellt ist, wobei

A1) mindestens ein Alkylester der (Meth)acrylsäure ist und

A2) mindestens ein Hydroxyalkylester der (Meth)acrylsäure ist, welcher eine primäre Hydroxygruppe aufweist und wobei die Alkylengruppe des Hydroxyalkylesters linear ist und 2 bis 6 Kohlenstoffatome umfasst,

wobei die Komponente A) ausschließlich primäre Hydroxygruppen und eine Hydroxyzahl von 80 bis 500 mg KOH/g aufweist und

B) mindestens ein Polyisocyanat ist,
wobei die Komponente A) zusätzlich die Komponente C) umfasst, wobei

C) mindestens ein zwei- oder höherwertigen Alkohol und/oder mindestens ein Polyasparaginsäureester ist, dadurch gekennzeichnet, dass

(a) die Komponente A) durch Umsetzung der (Meth)acryleinheiten mindestens der Komponenten A1), A2) und A3) hergestellt ist, wobei

A3) mindestens ein polysiloxanhaltiges (Meth)acrylat ist
und / oder

(b) die Komponenten A) zusätzlich die Komponente D) umfasst, wobei

D) ein Polysiloxan ist, welches mindestens eine gegenüber Komponente B) reaktive Gruppe aufweist.

Erfindungsgemäß sind die Ausführungsformen (a) und (b) und auch ihre Kombination miteinander umfasst. In Ausführungsform (a) wird mindestens eine polysiloxanhaltige Komponente A3) über die Reaktion ihrer (Meth)acrylatgruppe in die Meth)acrylatkomponente A) auf Basis von (Meth)acrylatmonomeren mit eingebunden. In dieser Variante liegt das Polysiloxan somit chemisch gebunden in der Komponente A) vor.

In der Ausführungsform (b) liegt ein Polysiloxan D), welches mindestens eine gegenüber Polyisocyanatgruppen reaktive Gruppe aufweist, physikalisch vermischt mit der Komponente A) vor. Dies bedeutet, dass das Polysiloxan der Komponente D) nicht chemisch an die (Meth)acrylatkomponente A) gebunden ist. Wird das Zwei-Komponenten-System jedoch ausgehärtet, reagiert die mindestens eine gegenüber dem Polyisocyanat der Komponente B) reaktive Gruppe mit dem Polyisocyanat der Komponente B) und wird somit in der resultierenden Beschichtung durch diese Reaktion chemisch eingebunden.

Die folgenden Ausführungen gelten, soweit nicht explizit anders angegeben, für alle erfindungsgemäßen Ausführungsformen (a) und (b) und auch ihre Kombination miteinander.

Erfindungsgemäß wird ein Zwei-Komponenten-System bereitgestellt, welches die Komponenten A) und B) umfasst. Hierbei handelt es sich bevorzugt um ein Kit-of-parts. Dies bedeutet bevorzugt, dass die Komponenten A) und B) in räumlich getrennter Anordnung zueinander vorliegen. Stehen die Komponenten A) und B) in Kontakt miteinander, so erfolgt eine Reaktion dieser Komponenten. Dies bedeutet, dass ein solches in Kontakt Bringen der Komponenten A) und B) bevorzugt erst kurz vor der Anwendung beziehungsweise Aushärtung erfolgt.

Das erfindungsgemäße Zwei-Komponenten-System umfasst die Komponenten A) und B). Bevorzugt besteht es aus den Komponenten A) und B). Dabei ist vorgesehen, dass die Komponenten A) und B) jeweils noch weitere Bestandteile umfassen können, welche in ihrer chemischen Natur von denen der Definition der Komponenten A) und B) abweichen können. Beispielsweise enthält die Komponente A)zusätzlich die Komponente C). Das erfindungsgemäße Zwei-Komponenten-System setzt sich somit in Summe zusammen aus einer Komponente A) und einer Komponente B). Insbesondere bevorzugt setzt sich das erfindungsgemäße Zwei-Komponenten-System zusammen aus 0,1 bis 70 Gew.-% Komponente B) und 99,9 - 30 Gew.-% der Komponente A), bezogen auf den Festharzanteil der Komponente A). Die genannten Gewichtsanteile betragen in Summe 100 Gew.-%. Dabei weiß der Fachmann, wie er die Mengen der Komponenten A) und B) auf Basis der Äquivalentgewichte von NCO und OH der Komponenten auswählen muss.

Es hat sich überraschenderweise herausgestellt, dass das erfindungsgemäße Zwei-Komponenten-System eine verbesserte Haftung auf thermoplastischen Trägern, insbesondere Trägern, umfassend Polycarbonat, aufweist. Dabei wurde herausgefunden, dass weder die Anwesenheit von ausschließlich primären Hydroxygruppen in der Komponente A) alleine noch die Anwesenheit einer Polysiloxankomponente gemäß Ausführungsform (a) (chemische Einbindung in Komponente A)) und / oder Ausführungsform (b) (physikalische Einbindung in Komponente A)) zu einer solchen Verbesserung der Haftung führt. Insoweit liegt ein synergistischer Effekt der Anwesenheit von ausschließlich primären Hydroxygruppen und der Anwesenheit einer speziellen Polysiloxankomponente vor. Ohne an eine Theorie gebunden sein zu wollen, wird vermutet, dass die ausschließliche Anwesenheit der primären Hydroxygruppen zu einer Reaktivität der Komponente A) gegenüber B) führt, die so optimiert ist, dass die Polysiloxangruppen ausreichend Zeit haben, sich in der abbindenden Beschichtung für eine optimierte Haftung auszurichten und gleichzeitig die Beschichtung in einer wirtschaftlichen Zeit mit guten mechanischen Eigenschaften aushärtet.

Dabei ist das erfindungsgemäße Zwei-Komponenten-System geeignet für die Herstellung von Dickschichtbeschichtungen. Hierbei können Beschichtungen mit einer bevorzugten Schichtdicke von 1 bis 1000 $\mu$m, besonders bevorzugt 70 bis 500 $\mu$m, ganz besonders bevorzugt 90 bis 400 $\mu$m erhalten werden, welche blasenfrei aushärten und eine homogene Oberfläche aufweisen. Insbesondere ist das erfindungsgemäße Zwei-Komponenten-System geeignet für die Anwendung in einem RIM- und / oder IMC-Verfahren. Bevorzugt ist das erfindungsgemäße Zwei-Komponenten-System dadurch gekennzeichnet, dass die Komponenten A) und B) in Summe maximal 3 Gew.-%, besonders bevorzugt maximal 1 Gew.-% eines Lösemittels bezogen auf das Gesamtgewicht des Zwei-Komponenten-Systems enthalten. Ganz besonders bevorzugt ist das Zwei-Komponenten-System lösemittelfrei. Bei einem Lösemittel handelt es sich bevorzugt um dem Fachmann bekannte organische oder wässrige Lösemittel, welche im Wesentlichen inert gegenüber den Komponenten A) und B) sind, jedoch eingesetzt werden, um die Viskosität der Komponenten A) und / oder B) zu verändern. Besonders bevorzugt umfasst das erfindungsgemäße Zwei-Komponenten-System kein Lösemittel, welches ausgewählt wird aus der Gruppe, bestehend aus Glykolethern, wie Ethylenglykoldimethylether, oder Glykoletherester; Ester, wie Butylacetat, Butylglykolacetat, 3-Methoxy-n-butylacetat, Butyldiglykolacetat, Methoxypropyl-acetat, Ethoxypropylacetat, Ethyl-3-Ethoxypropionat, Isobutylacetat oder Amylacetat; Ketone, wie Methyl-namylketon, Methylethylketon, Methylisobutylketon, Diisobutylketon, Cyclohexanon, Isophoron; aromatische Kohlenwasserstoffe, wie Xylol und aliphatische Kohlenwasserstoffe.

**Komponente A)**

Erfindungsgemäß umfasst die Komponente A) mindestens eine (Meth)acrylatkomponente auf Basis von (Meth)acrylatmonomeren, welche durch Umsetzung der (Meth)acryleinheiten mindestens der Komponenten A1) und A2) hergestellt ist, wobei

A1) mindestens ein Alkylester der (Meth)acrylsäure ist und
A2) mindestens ein Hydroxyalkylester der (Meth)acrylsäure ist, welcher eine primäre Hydroxygruppe aufweist und wobei die Alkylengruppe des Hydroxyalkylesters linear ist und 2 bis 6 Kohlenstoffatome umfasst,

wobei die Komponente A) ausschließlich primäre Hydroxygruppen und eine Hydroxyzahl von 80 bis 500 mg KOH/g aufweist.

Bevorzugt wird unter dem Ausdruck "(Meth)acrylatkomponente auf Basis von (Meth)acrylatmonomeren" eine polymere Komponente verstanden, welche ausschließlich durch die Reaktion von Methacrylaten und / oder Acrylaten

miteinander entsteht. Dies bedeutet bevorzugt, dass die Komponente A) ausschließlich durch die Reaktion von Monomeren erhalten wird, welche mindestens eine (Meth)acrylatgruppe aufweisen und das Polymer durch die Reaktion dieser (Meth)acrylatgruppen miteinander aufgebaut wird. Insbesondere ist es bevorzugt, dass das durch die Umsetzung der (Meth)acryleinheiten entstehende Polymerrückgrat der Komponente A) keinerlei Ether- und/oder Estergruppen aufweist. Dies hat insbesondere den Vorteil, dass die Komponente A) in der resultierenden Beschichtung lichtecht ,vergilbungsfrei, chemikalienbeständig, lösungsmittelbeständig und wetterbeständig ist.

Erfindungsgemäß umfasst der Ausdruck, dass die Komponente A) "ausschließlich primäre Hydroxygruppen aufweist" bevorzugt, dass die Komponente A) mehrere unterschiedliche Komponenten aufweisen kann, in denen Hydroxygruppen sind (beispielsweise durch zwei unterschiedliche Hydroxyalkylester der (Meth)acrylsäure der Komponente A2)), in diesem Fall aber alle Komponenten, welche Hydroxygruppen aufweisen, ausschließlich primäre Hydroxygruppen aufweisen.

Erfindungsgemäße Alkylester der (Meth)acrylsäure A1) sind insbesondere Alkylester mit 1 bis 12 Kohlenstoffatomen im Alkylrest. Hierzu zählen beispielsweise Methylmethacrylat, Methylacrylat, Ethylhexylacrylat, Ethylmethacrylat, Ethylacrylat, Isobornyl-Methacrylat, Isobornylacrylat, n-Butylacrylat, n-Butylmethacrylat, iso-Butylacrylat, iso-Butylmethacrylat, tert-Butylacrylat und tert.-Butylmethacrylat. Besonders bevorzugt sind hierbei tert-Butylacrylat oder Ethylacrylat.

Als Hydroxyalkylester der Acrylsäure bzw. Methacrylsäure A1) können erfindungsgemäß Hydroxyalkyl(meth)acrylatester mit 2 bis 6 Kohlenstoffatomen im linearen Hydroxyalkylrest eingesetzt werden, wie beispielsweise Hydroxyethylacrylat, Hydroxyethylmethacrylat, Hydroxypropylmethacrylat, Hydroxypropylacrylat, Hydroxybutylmethacrylat, Hydroxybutylacrylat oder deren Mischungen. Besonders bevorzugt Hydroxyethylacrylat oder Hydroxybutylacrylat.

Dabei ist der Fachmann in der Lage, die einzelnen (Meth)acrylsäureester und auch gegebenenfalls weitere Bestandteile der Komponente A) so auszuwählen beziehungsweise zu variieren, dass im Wesentlichen die gewünschte Härte und Kratzfestigkeit der resultierenden Beschichtung resultieren. Dabei weiß der Fachmann, dass, je räumlich anspruchsvoller der Alkylrest in einem (Meth)acrylsäureester ist, desto höher die Glasübergangstemperatur der resultierenden Beschichtung wird. Ebenso weiß der Fachmann, dass Methacrylate eine Beschichtung mehr Härte verleihen als Acrylate. Bevorzugt werden die Komponenten A1) und / oder A2) so ausgewählt, dass eine Glasübergangstemperatur der ausgehärteten Beschichtung von 0 bis 80 °C, besonders bevorzugt 10 bis 70 °C und ganz besonders bevorzugt 25 bis 60 °C resultiert. Dabei wird die Glasübergangstemperatur bevorzugt, wie in den Beispielen beschrieben, bestimmt.

Es ist des Weiteren bevorzugt, dass die Komponente A) hergestellt ist durch Umsetzung der (Meth)acryleinheiten mindestens der Komponenten A1) und A2), wobei

A1) mindestens zwei voneinander unterschiedliche Alkylester der (Meth)acrylsäure sind und

A2) mindestens zwei voneinander unterschiedliche Hydroxyalkylester der (Meth)acrylsäure sind, welche jeweils eine primäre Hydroxy-Gruppe aufweisen und wobei die Alkylengruppen der Hydroxyalkylester jeweils linear sind und 2 bis 6 Kohlenstoffatome umfassen. Somit umfasst die Komponente A) bevorzugt mindestens vier voneinander unterschiedliche (Meth)acrylsäureester und gegebenenfalls noch die Komponente A3).

Dabei ist es weiterhin bevorzugt, dass die Komponente A2) mindestens zwei voneinander unterschiedliche Hydroxyalkylester umfasst und davon die eine Alkylengruppen des einen Hydroxyalkylesters 2 oder 3 Kohlenstoffatome umfasst und die Alkylengruppe des mindestens einen anderen Hydroxyalkylesters 4 oder 5 Kohlenstoffatome umfasst. Ganz besonders bevorzugt umfasst die Komponente A2) eine Mischung aus Hydroxyethylacrylat und Hydroxybutylacrylat. Weiterhin ist es bevorzugt, dass die Komponente A1) eine Mischung aus tert-Butylacrylat und Ethylacrylat umfasst. Ganz besonders bevorzugt besteht die Komponente A1) aus tert-Butylacrylat und Ethylacrylat und die Komponente A2) aus Hydroxyethylacrylat und Hydroxybutylacrylat.

Bevorzugt umfasst die Komponente A) von 20 bis 85 Gew.-%, besonders bevorzugt von 40 bis 80 Gew.-%, ganz besonders bevorzugt von 60 bis 75 Gew.-% der Komponente A1) und von 80 bis 15 Gew.-%, besonders bevorzugt von 60 bis 20 Gew.-%, ganz besonders bevorzugt von 40 bis 25 Gew.-% der Komponente A2), wobei die Gew.-% auf das Gesamtgewicht der Komponenten A1) und A2) bezogen sind.

Dabei umfasst die Komponente A) weiterhin bevorzugt in der Ausführungsform (a) und der Kombination der Ausführungsform (a) mit der Ausführungsform (b) 0,5 bis 15 Gew.-%, bevorzugt 1 bis 12 Gew.-% der Komponente A3), wobei die Gew.-% auf die Summe der einzelnen Komponenten mit (Meth)acryleinheiten bezogen ist, die die Komponente A) bilden.

Ebenso bevorzugt umfasst die Komponente A) in der Ausführungsform (b) und der Kombination der Ausführungsform (a) mit der Ausführungsform (b) 0,25 bis 10,00 Gew.-%, bevorzugt 0,3 bis 5 Gew.-%, ganz besonders bevorzugt 0,4 bis 2 Gew.-% der Komponente D), wobei die Gew.-% auf die Summe der einzelnen Komponenten mit (Meth)acryleinheiten bezogen ist, die die Komponente A) bilden. Je nach chemischer Struktur und Menge der Komponente D)

können Entmischungseffekte mit der Komponente A) auftreten. Diese sind jedoch für den Fachmann beispielsweise durch Reduzierung der Menge der Komponente A) innerhalb der oben genannten Grenzen oder Erhöhung der Phenylsubstitutionen der Komponente D) am Si-Atom vermeidbar. Der Fachmann ist somit in der Lage, die Menge und Struktur der Komponente D) insbesondere innerhalb der genannten Bevorzugungen anzupassen, so dass keine Entmischung auftritt und der erfindungsgemäße Effekt erzielt wird.

Die Komponente A) kann des Weiteren mindestens eine aromatische Vinylverbindung, wie beispielsweise Styrol, alpha-Methylstyrol oder Vinyltoluol und mindestens eine (Meth)acrylsäure enthalten. Es ist bevorzugt, dass die Komponente A) durch Umsetzung der (Meth)acryleinheiten mindestens der folgenden Komponenten erhalten wird:

0 bis 30 Gew.-% mindestens einer aromatischen Vinylverbindung, bevorzugt Styrol, alpha-Methylstyrol oder Vinyltoluol

20 bis 75 Gew.-% der Komponente A1),

10 bis 35 Gew.-% der Komponente A2),

0 bis 5 Gew.-% mindestens einer (Meth)acrylsäure und

0 bis 10 Gew.-% der Komponente A3),

jeweils bezogen auf das Gesamtgewicht der Komponente A).

In der erfindungsgemäßen Ausführungsform (a) und der Kombination der Ausführungsform (a) mit der Ausführungsform (b) ist das erfindungsgemäße Zwei-Komponenten-System des Weiteren dadurch gekennzeichnet, dass die Komponente A) durch Umsetzung der (Meth)acryleinheiten mindestens der Komponenten A1), A2) und A3) hergestellt ist, wobei A3) mindestens ein polysiloxanhaltiges (Meth)acrylat ist. Dies bedeutet bevorzugt, dass die Komponente A3) mindestens eine (Meth)acrylat-Gruppe und ein Polysiloxan-Segment umfasst. Die Komponente A3) ist bevorzugt monofunktionell. Dies bedeutet, dass sie nur eine (Meth)acrylat-Gruppe aufweist. Weist die Komponente A3) mehr als eine Funktionalität auf, so sind die funktionellen Gruppen bevorzugt ausschließlich (Meth)acrylat-Gruppen.

Im Vergleich zur im Stand der Technik beschriebenen Einkondensation des Polysiloxans in eine Hydroxygruppen enthaltende Komponente ist es erfindungsgemäß vorteilhaft, dass das Polysiloxan A3) über die (Meth)acrylat-Gruppe(n) in die Komponente A) eingebaut ist. Dadurch resultiert eine Si-C-Bindung (und keine Si-O-C-Bindung), wodurch die Komponente weniger hydrolyseempfindlich ist. Durch den Einbau der Komponente A3) in die Komponente A) entsteht somit ein Propfcopolymer, welches ein statistisches Poly(meth)acrylat-Rückgrat und Polysiloxanketten aufweist.

Es ist bevorzugt, dass das mindestens eine polysiloxanhaltige (Meth)acrylat A3) dargestellt wird durch die Formel (I)

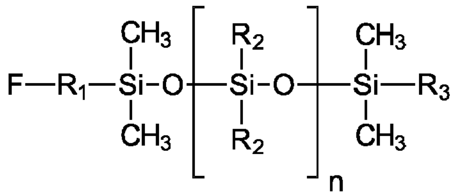

(I),

in der $R_1$ für eine Alkylengruppe, bevorzugt für eine lineare oder verzweigte Alkylengruppe mit 1 bis 18 Kohlenstoffatomen, besonders bevorzugt 2 bis 6 Kohlenstoffatomen, steht,

$R_2$ jeweils unabhängig voneinander für eine Alkyl- oder Arylgruppe, bevorzugt eine lineare oder verzweigte Alkylgruppe mit 1 bis 18 Kohlenstoffatomen oder eine Arylgruppe mit 6 bis 18 Kohlenstoffatomen, besonders bevorzugt eine Methylgruppe oder eine Phenylgruppe steht,

$R_3$ für eine Alkylgruppe, bevorzugt für eine lineare oder verzweigte Alkylengruppe mit 1 bis 18 Kohlenstoffatomen, besonders bevorzugt 2 bis 6 Kohlenstoffatomen, steht,

F für eine Acryloxy oder Methacryloxygruppe steht und

n die mittlere Anzahl an Wiederholungseinheiten darstellt und zwischen 1 bis 70 liegt, bevorzugt zwischen 5 bis 65 und besonders bevorzugt zwischen 20 bis 35.

Damit ist das Molekulargewicht Mn der Komponente A3) bevorzugt so gewählt, dass es zwischen 500 und 5000 g/mol, vorzugsweise zwischen 600 und 4000 g/mol und ganz besonders bevorzugt zwischen 700 und 3000 g/mol liegt. Das Molekulargewicht wird bevorzugt über dem Fachmann bekannte Methoden bestimmt.

Geeignete Komponenten A3) sind beispielsweise von der Fa. Shin-Etsu Chemicals unter den kommerziellen Namen, KF-2012, X-22-174BX und X-22-174ASX erhältlich..

In der erfindungsgemäßen Ausführungsform (b) und der Kombination der Ausführungsform (a) mit der Ausführungsform (b) ist das erfindungsgemäße Zwei-Komponenten-System dadurch gekennzeichnet, dass die Komponenten A) zusätzlich die Komponente D) umfasst, wobei D) ein Polysiloxan ist, welches mindestens eine gegenüber Komponente B) reaktive Gruppe aufweist. Dabei umfasst ist die Komponente D) bevorzugt ein Polysiloxan, welches mindestens eine Amino-, Mercapto-, Hydroxy- oder Hydroxy-Polyethergruppe aufweist. Besonders bevorzugt wird das Polysiloxan der Komponente D) dargestellt durch die Formel (II)

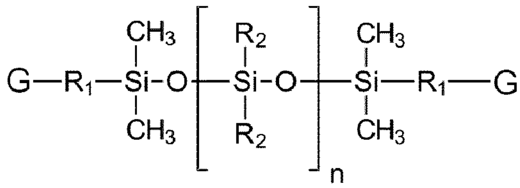

(II),

in der $R_1$ jeweils unabhängig voneinander für eine Alkylengruppe, bevorzugt für eine lineare oder verzweigte Alkylengruppe mit 1 bis 18 Kohlenstoffatomen, besonders bevorzugt 2 bis 6 Kohlenstoffatomen, steht,

$R_2$ jeweils unabhängig voneinander für eine Alkyl- oder Arylgruppe, bevorzugt eine lineare oder verzweigte Alkylgruppe mit 1 bis 18 Kohlenstoffatomen oder eine Arylgruppe mit 6 bis 18 Kohlenstoffatomen, besonders bevorzugt eine Methylgruppe oder eine Phenylgruppe steht,

G jeweils unabhängig voneinander für eine Amino-, Mercapto-, Hydroxy- oder Hydroxy-Polyethergruppe, bevorzugt für eine Amino- oder Hydroxygruppe steht und

n die mittlere Anzahl an Wiederholungseinheiten darstellt und zwischen 1 bis 50 liegt, bevorzugt zwischen 5 bis 40 und besonders bevorzugt zwischen 6 bis 32.

Damit ist das Molekulargewicht Mn der Komponente D) bevorzugt so gewählt, dass es zwischen 500 und 6000 g/mol, vorzugsweise zwischen 600 und 5000 g/mol, ganz besonders bevorzugt zwischen 700 und 4500 g/mol liegt. Das Molekulargewicht wird bevorzugt über dem Fachmann bekannte Methoden bestimmt.

Geeignete Komponenten A3) sind beispielsweise von der Fa. Shin-Etsu Chemicals unter den kommerziellen Namen KF-6000, X-22-9409, X-22-1660B-3, X-22-4952, X-22-4272 und KF-6123 oder der Firma Evonik Industries AG unter dem kommerziellen Namen Tegomer H-Si 2315 oder H-Si 6441P erhältlich.

Die Herstellung der erfindungsgemäßen Komponente A) kann entsprechend der dem Fachmann bekannten Verfahren als Lösungs- oder Massepolymerisation erfolgen, bevorzugt als Lösungspolymerisation. Dabei können Lösemittel mit Siedepunkten von 80°C bis 220°C, bevorzugt 100°C bis 185°C für die Lösungspolymerisation eingesetzt werden. Beispiele für solche Lösungsmittel sind: Glykolether, wie Ethylenglykoldimethyleter, Glykoletherester, Ethyl- wie Butylglykolacetat, 3-Methoxy-n-butylacetat, Butyldiglykolacetat, Methoxypropyl-acetat, Ethoxypropylacetat, Ethyl-3-Ethoxypropionat, Isobutylacetat, Amylacetat; und Ketone, wie Metyl-namylketon, Methylethylketion, Methylisobutylketon, Diisobutylketon, Cyclohexanon, Isophoron; aromatische Kohlenwasserstoffe, wie Xylol.

Die Polymerisation kann kontinuierlich oder diskontinuierlich (im sogenannten Batch-Verfahren) durchgeführt werden. Bevorzugt wird die Polymerisation im Semibatchverfahren durchgeführt, d.h. das Lösemittel und ggf. Monomere und / oder Reaktivverdünner wie z.B. mehrwertige Alkohole werden im Reaktionsgefäß vorgelegt, während die weiteren Monomere und der Initiator über einen oder mehrere Zuläufe in einer Zeit von 2 bis 15 Stunden, bevorzugt 3 bis 8 Stunden zudosiert werden.

Für die Herstellung der erfindungsgemäßen Komponente A) können übliche Polymerisationsinitiatoren, einzeln oder im Gemisch, eingesetzt werden. Hierzu zählen aliphatische Azoverbindungen, Diacylperoxide, Peroxydicarbonate,

Alkylperester, Alkylhydroperoxide, Perketale, Dialkylperoxid oder Ketonperoxide. Der Anteil der Initiatoren kann z. B. 0,1 bis 8 Gew.-% bezogen auf das Gesamtgewicht der Ausgangskomponenten betragen. Die Polymerisation wird bei Temperaturen zwischen 80 und 180°C, vorzugsweise bei 80°C bis 140°C durchgeführt.

Das Polymerisationsverfahren kann entweder in An- oder Abwesenheit eines Kettenüberträgers durchgeführt werden. Als Kettenüberträger können typische, für die radikalische Polymerisation beschriebene Spezies eingesetzt werden, wie sie dem Fachmann bekannt sind.

Zu den schwefelfreien Molekulargewichtsreglern gehören beispielsweise dimeres alpha-Methylstyrol (2,4 Diphenyl-4-methyl-1-penten), Enolether aliphatischer und / oder cycloaliphatischer Aldehyde, Terpene, β-terpinen, Terpinolen, 1,4-Cyclohexadien, 1,4-Dihydronaphtalin, 1,4,5,8-Tetrahydronaphtalin, 2,5-Dihydrofuran, 2,5-Dimethylfuran und / oder 3,6-Dihydro-2H-pyran, bevorzugt ist dimeres alpha-Methylstyrol.

Als schwefelhaltige Molekulargewichtsregler können vorzugsweise Mercaptoverbindungen, Dialkylsulfide, Dialkyldisulfide und / oder Diarylsulfide eingesetzt werden. Folgende Polymerisationsregler werden beispielhaft genannt: Di-n-butylsulfid, Di-n-octylsulfid, Diphenylsulfid, Thiodiglykol, Ethylthioethanol, Diisopropylsulfid, Di-n-butyl-disulfid, Di-n-hexyldisulfid, Diacetyldisulfid, Diethanolsulfid, Di-t-butyltrisulfid und Dimethylsulfoxid. Bevorzugt als Molekulargewichtsregler eingesetzte Verbindungen sind Mercaptoverbindungen, Dialkylsulfide, Dialkyldisulfide, und / oder Diarylsulfide. Beispiele für diese Verbindungen sind Ethylthioglykolat, 2-Ethylhexylthioglykolat, Pentaerythrittetrathioglykolat, Cystein, 2-Mercaptoethanol, 1,3-Mercaptopropanol, 3-Mercaptopropan-1,2-diol, 1,4-Mercaptobutanol, Mercaptoessigsäure, 3-Mercaptopropionsäure, Thioglykolsäure, Mercaptobernsteinsäure, Thioglycerin, Thioessigsäure, Thioharnstoff, und Alkylmercaptane wie n-Butylmercaptan, n-Hexylmercaptan, t-Dodecylmercaptan oder n-Dodecylmercaptan. Im Rahmen der vorliegenden Erfindung wird die Verwendung von 2-Mercaptoethanol sowie Thioglycerol als Kettenüberträger ganz besonders bevorzugt.

Die Molekulargewichtsregler werden bevorzugt in Mengen von 0,05 bis 10 Gew.-%, insbesondere 1 bis 6 Gew.-% und besonders bevorzugt 2 - 5,5 Gew.-% bezogen auf die bei der Polymerisation eingesetzten Monomere, verwendet.

Die OH-Zahl (OHZ) der erfindungsgemäßen Komponente A) liegt im Bereich von 80 bis 500 mg KOH/g, vorzugsweise im Bereich von 100 bis 400 mg KOH/g, besonders bevorzugt im Bereich von 120 bis 350 mg KOH/g. Die Bestimmung der OH-Zahl erfolgt bevorzugt titrimetrisch. Die Probe wird dabei mit Essigsäureanhydrid in Gegenwart von Pyridin acetyliert. Pro Hydroxylgruppe entsteht ein Mol Essigsäure; während das überschüssige Essigsäureanhydrid zwei Mol Essigsäure liefert. Der Verbrauch an Essigsäure wird titrimetrisch aus der Differenz zwischen Haupt- und einem parallel durchzuführenden Blindwert ermittelt. Unter Berücksichtigung der verbrauchten ml 0,5 n Kalilauge im Haupt- und Blindversuch sowie der Säurezahl (SZ) der Probe und der Einwaage, wird die Hydroxylzahl errechnet.

$$\mathrm{OHZ} = \frac{(\mathrm{b}-\mathrm{a})\ \mathrm{x}\ 28{,}05}{\mathrm{E}} + \mathrm{SZ}$$

a = verbrauchte ml 0,5 n Kalilauge im Hauptversuch

b = verbrauchte ml 0,5 n Kalilauge im Blindversuch

E = Einwaage in g

Die gewünschte Säurezahl (SZ) für das erfindungsgemäße Bindemittel liegt im Bereich von 0,1 bis 20 mg KOH/g, vorzugsweise im Bereich von 0,5 bis 10 mg KOH/g, ganz besonders bevorzugt 1 bis 5 mg KOH/g. Die Bestimmung der Säurezahl erfolgt ebenfalls bevorzugt titrimetrisch. Die Säurezahl gibt an, wie viel mg KOH notwendig ist, um die in 1 g Fettsäure enthaltenen freien Fettsäuren zu neutralisieren. Eine geeignete Einwaage wird in ein Becherglas eingewogen, in ca.100 ml neutralisiertem Ethanol gelöst und mit Natronlauge potentiometrisch bis zum Endpunkt titriert. Die Auswertung der Säurezahl wird wie folgt bestimmt:

$$\mathrm{SZ}\left[mgKOH/g\right] = \frac{V \times 56.1 \times n \times f}{\mathrm{E}}$$

V = Verbrauch Titrant (ml)

n = Normalität Titrant

E = Einwaage Probe (g)

f = Faktor Titrant

Die Molekulargewichte Mn der erfindungsgemäßen Komponente A) liegen zwischen 700 bis 3000 g/mol, bevorzugt 800 bis 2000 g/mol. Die Bestimmung von Molekulargewichten erfolgt im Rahmen der vorliegenden Erfindung und soweit nicht anders angegeben durch GPC-Messungen. Zur Bestimmung des gewichtmittleren Molekulargewichts Mw, des zahlenmittleren Molekulargewichts Mn sowie der Polydispersität Mw/Mn wurden folgende Messbedingungen eingehalten: Säulenkombination SDV 1000/10000 Å (Länge 65 cm), Temperatur 30 °C, THF als mobile Phase, Fließrate 1 ml/min, Probenkonzentration 10 g/l, RI-Detektor. Die Auswertung der erfindungsgemäßen Bindemittel erfolgte gegen Polystyrol-Standard (162-2.570.000 g/mol).

**Komponente B)**

Bei der erfindungsgemäßen Komponente B) handelt es sich um mindestens ein Polyisocyanat. Dabei weist die Komponente B) bevorzugt mindestens zwei NCO-Gruppen auf. Die verwendbaren Polyisocyanate sind lacktypische Polyisocyanate wie zum Beispiel Desmodur® N-Typen der Firma Covestro Deutschland AG oder die Vestanat® HT-Typen der Firma Evonik Industries AG.

Bevorzugte Polyisocyanate sind die dem Fachmann an sich bekannten aromatischen, araliphatischen, aliphatischen oder cycloaliphatischen Polyisocyanate einer NCO-Funktionalität von bevorzugt $\geq 2$, welche auch Iminooxadiazindion-, Isocyanurat-, Uretdion-, Urethan-, Allophanat-, Biuret-, Harnstoff-, Oxadiazintrion, Oxazolidinon-, Acylharnstoff- und/oder Carbodiimid-Strukturen aufweisen können. Diese können einzeln oder in beliebigen Mischungen untereinander eingesetzt werden.

Die vorstehend genannten Polyisocyanate basieren dabei auf dem Fachmann an sich bekannten Di- bzw. Triisocyanaten mit aliphatisch, cycloaliphatisch, araliphatisch und/oder aromatisch gebundenen Isocyanatgruppen, wobei es unerheblich ist, ob diese unter Verwendung von Phosgen oder nach phosgenfreien Verfahren hergestellt wurden. Beispiele für solche Di- bzw. Triisocyanate sind 1,4-Diisocyanatobutan, 1,5-Diisocyanatopentan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan (Desmodur® W, Bayer AG, Leverkusen, DE), 4-Isocyanatomethyl-1,8-octandiisocyanat (Triisocyanatononan, TIN), ω,ω'-Diisocyanato-1,3-dimethylcyclohexan ($H_6XDI$), 1-Isocyanato-1-methyl-3-isocyanato-methylcyclohexan, 1-Isocyanato-1-methyl-4-isocyanato-methylcyclohexan, Bis-(isocyanatomethyl)-norbornan, 1,5-Naphthalendiisocyanat, 1,3- und 1,4-Bis-(2-isocyanato-prop-2-yl)-benzol (TMXDI), 2,4- und 2,6-Diisocyanatotoluol (TDI) insbesondere das 2,4 und das 2,6-Isomere und technische Gemische der beiden Isomeren, 2,4'- und 4,4'-Diisocyanatodiphenylmethan (MDI), polymeres MDI (pMDI) 1,5-Diisocyanatonaphthalin, 1,3-Bis(isocyanatomethyl)benzol (XDI) sowie beliebige Mischungen genannter Verbindungen.

Bevorzugt weisen die Polyisocyanate dabei eine mittlere NCO-Funktionalität von 2,0 bis 5,0, bevorzugt von 2,2 bis 4,5, besonders bevorzugt von 2,2 bis 2,7 und einen Gehalt an Isocyanatgruppen von 5,0 bis 37,0 Gew.-%, bevorzugt von 14,0 bis 34,0 Gew.-% auf.

In einer bevorzugten Ausführungsform werden Polyisocyanate oder Polyisocyanatgemische der vorstehend genannten Art mit ausschließlich aliphatisch und/oder cycloaliphatisch gebundenen Isocyanatgruppen eingesetzt.

Ganz besonders bevorzugt basieren die Polyisocyanate der vorstehend genannten Art auf Hexamethylendiisocyanat, Isophorondiisocyanat, den isomeren Bis-(4,4'-isocyanatocyclohexyl)methanen sowie deren Mischungen.

Der Anteil an Polyisocyanat der Komponente B) wird bevorzugt so gewählt, dass auf eine Hydroxylgruppe der erfindungsgemäßen Komponente A) 0,5 bis 1,5 bevorzugt 0,9 bis 1,1 und besonders bevorzugt 1,0 Isocyanat-Gruppen entfallen.

**Komponente C)**

Im erfindungsgemäßen Zwei-Komponenten-System ist immer eine Komponente C), welche mindestens ein zwei- oder höherwertigen Alkohol und/oder mindestens ein Polyasparaginsäureester ist, mindestens in einer der Komponenten A) und B) zusätzlich umfasst. Die Komponente C) ist somit ein Bestandteil mindestens der Komponente A) und /oder Komponente B).

Die Komponente C) wird auch als Reaktivverdünner bezeichnet und dient der Viskositätseinstellung der Komponente A). Bevorzugt wird der zwei- oder höherwertige Alkohol ausgewählt aus der Gruppe, bestehend aus Ethandiol, Diethylenglykol, 1,2- bzw. 1,3-Propandiol, 2-Methyl-1,3-propandiol, Dipropylenglykol, 1,4-Butandiol, 1,3-Butandiol, 1,5 Pentandiol, 1,6-Hexandiol, 1,10-Decandiol, 1,12-Dodecandiol, Glycerin, Trimethylolpropan und 8(9)-Dihydroxymethyltricyclo[5.2.1.02.6]decan (TCD-Alkohol-DM). Vorzugsweise werden Ethandiol, Diethylenglykol, 1,2- bzw. 1,3-Propandiol, 2-Methyl-1,3-propandiol, 1,4-Butandiol, 1,3-Butandiol eingesetzt. Weiterhin können auch Polyasparaginsäureester als

reaktivverdünnende Komponente eingesetzt werden. Geeignete Polyasparaginsäureester sind beispielsweise von der Firma Covestro Deutschland AG unter dem kommerziellen Namen Desmophen NH 1220, Desmophen NH 1420, Desmophen NH 1520 und Desmophen NH 2850 XP erhältlich. Polyasparaginsäureester können bevorzugt nach der allgemeinen Formel (III) beschrieben werden, wobei X eine Alkylen- oder Cycloalkylengruppe ist.

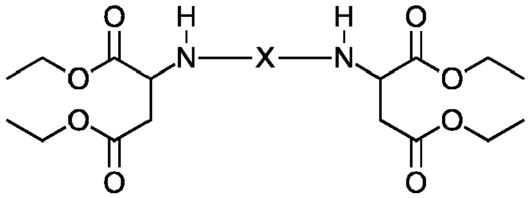

Formel (III)

In einer bevorzugten Ausführungsform umfasst die Komponente C) keine Polyasparaginsäureester.

Erfindungsgemäß umfasst der Begriff "Alkohol" bevorzugt auch lineare oder verzweigte Alkohole, welche Estergruppen und/oder Ethergruppen enthalten. In diesem Fall kann der Alkohol auch oligomer sein. Beispiele für solche Komponenten sind Capa 2043, Capa 3031, W' Pol 1181/03 oder 1181/09. In diesem Fall ist die Komponente A) in einem mengenmäßigen Überschuss zu dem oligomeren Alkohol der Komponente C) vorhanden. Wie bereits oben beschrieben, dient Komponente C) als Reaktivverdünner zur Einstellung der Viskosität der Komponenten A). Dadurch sind entsprechende nachteilige Eigenschaften, die das erfindungsgemäße Zwei-Komponenten-System durch die Anwesenheit von Ether- oder Estergruppen aufweisen könnte, durch die geringen Mengen dieser Gruppen vernachlässigbar.

Die **Komponente D)** wurde bereits unter der Komponente A) näher beschrieben.

Das erfindungsgemäße Zwei-Komponenten-System ist bevorzugt dadurch gekennzeichnet, dass das mindestens eine der Komponenten A) und B) zusätzlich mindestens einen Hilfs- oder Zusatzstoff umfasst. Diese werden bevorzugt ausgewählt aus der Gruppe, bestehend aus Katalysatoren, Reaktionsverzögerern, Pigmenten, Farbstoffen, Flammschutzmitteln, Stabilisatoren, Weichmachern, fungistatisch oder bakteriostatisch wirkenden Substanzen, Füllstoffen und lacktypischen Additiven.

Bei den Katalysatoren handelt sich beispielsweise um tertiäre Amine (wie Triethylamin, Tributylamin, N-Methylmorpholin, N-Ethylmorpholin, N,N,N',N'-Tetramethylethylendiamin, Pentamethyldiethylentriamin und höhere Homologe, 1,4-Diazabicyclo-(2,2,2)octan, N-Methyl-N'-dimethylaminoethylpiperazin, Bis-(dimethylaminoalkyl)piperazine, N,N-Dimethylbenzylamin, N,N-Dimethylcyclohexylamin, N,N-Diethylbenzylamin, Bis-(N,N-diethylamino-ethyl)adipat, N,N,N',N'-Tetramethyl-1,3-butandiamin, N,N-Dimethyl-β-phenylethylamin, 1,2-Dimethylimidazol, 2-Methylimidazol), monocyclische und bicyclische Amide, Bis-(dialkylamino)alkylether, Amidgruppen (vorzugsweise Formamidgruppen) aufweisende tertiäre Amine, Mannichbasen aus sekundären Aminen (wie Dimethylamin) und Aldehyden, (vorzugsweise Formaldehyd oder Ketonen wie Aceton, Methylethylketon oder Cyclohexanon) und Phenolen (wie Phenol, Nonylphenol oder Bisphenol), gegenüber Isocyanatgruppen aktive Wasserstoffatome aufweisende tertiäre Amine (z.B. Triethanolamin, Triisopropanolamin, N-Methyldiethanolamin, N-Ethyldietanolamin, N,N-Dimethylethanolamin), sowie deren Umsetzungsprodukte mit Alkylenoxiden wie Propylenoxid und/oder Ehtylenoxid, sekundärtertiäre Amine, Silaamine mit Kohlenstoff-Silicium-Bindungen (2,2,4-Trimethyl-2-silamorpholin und 1,3-Diethylaminomethyltetramethyldisiloxan), stickstoffhaltige Basen (wie Tetraalkylammoniumhydroxide), Alkalihydroxide (wie Natriumhydroxid, Alkaliphenolate wie Natriumphenolat), Alkalialkoholate (wie Natriummethylat), und/oder Hexahydrotriazine.

Die Reaktion zwischen NCO-Gruppen und Zerewitinoff-aktiven Wasserstoffatomen wird in an sich bekannter Weise auch durch Lactame und Azalactame stark beschleunigt, wobei sich zunächst ein Assoziat zwischen dem Lactam und der Verbindung mit acidem Wasserstoff ausbildet.

Es können auch organische Metallverbindungen, insbesondere organische Zinn- und/oder Bismuthverbindungen, als Katalysatoren verwendet werden. Als organische Zinnverbindungen kommen neben schwefelhaltigen Verbindungen wie Di-n-octyl-zinnmercaptid vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht. Organische Bismuth-Katalysatoren werden beispielsweise in der Patentanmeldung WO 2004/000905 beschrieben.

Selbstverständlich können alle oben genannten Katalysatoren als Gemische eingesetzt werden. Von besonderem Interesse sind dabei Kombinationen aus organischen Metallverbindungen und Amidinen, Aminopyridinen oder Hydrazinopyridinen.

Die Katalysatoren werden in der Regel in einer Menge von etwa 0,001 bis 10 Gew.%, bezogen auf die Gesamtmenge an Verbindungen mit mindestens zwei gegenüber Isocyanaten reaktionsfähigen Wasserstoffatomen (mindestens Komponente A) und C)), eingesetzt.

Als Reaktionsverzögerer kommen z.B. sauer reagierende Stoffe (wie Salzsäure oder organische Säurehalogenide) in Frage.

Als lacktypische Additive / Komponenten kommen beispielsweise Pigmente oder Farbstoffe und Flammschutzmittel der an sich bekannten Art (z.B. Tris-chlorethylphosphat, Trikresylphosphat oder Ammoniumphosphat und -polyphosphat), ferner Stabilisatoren gegen Alterungs- und Witterungseinflüsse, Weichmacher und fungistatisch und bakteriostatisch wirkende Substanzen, Füllstoffe (wie Bariumsulfat, Kieselgur, Ruß oder Schlämmkreide), Entschäumer, Entlüfter, Slip- und Gleitadditive, Dispergieradditive, Antiscratchadditive; UV-Stabilisatoren (UV-Absorber, HALS) und Substratnetzmittel (wie beispielsweise Tego Wet 260) in Betracht.

In einem weiteren Aspekt der vorliegenden Erfindung wird ein Verbundbauteil, umfassend einen Träger und mindestens eine Beschichtung, welche in direktem Kontakt mit dem Substrat steht, bereitgestellt, wobei das Substrat eine thermoplastische Zusammensetzung umfasst und die Beschichtung erhalten wird durch Aushärtung des erfindungsgemäßen Zwei-Komponenten-Systems. Dabei ist dem Fachmann bekannt, wie er die Aushärtung des erfindungsgemäßen Zwei-Komponenten-Systems bewirkt. Bevorzugt wird die Beschichtung dabei hergestellt durch Auspolymerisation des erfindungsgemäßen Zwei-Komponenten-Systems in direktem Kontakt mit dem zuvor aus der thermoplastischen Zusammensetzung geformten und erstarrten Träger.

Bevorzugt umfasst die thermoplastische Zusammensetzung des Substrats mindestens ein Polycarbonat oder Polymethymethacrylat, besonders bevorzugt Polycarbonat. Dabei handelt es sich weiter bevorzugt um ein aromatisches (Co)Polycarbonat. Ganz besonders bevorzugt basiert das (Co)Polycarbonat auf Bisphenol A und gegebenenfalls einem weiteren, von Bisphenol A verschiedenen Bisphenol.

Die Verbundbauteile können grundsätzlich in jeder bekannten Weise hergestellt werden.

In der bevorzugten Ausführungsform der Erfindung erfolgt die Applikation der Beschichtung aus dem erfindungsgemäßen Zwei-Komponenten-System und gegebenenfalls die Aushärtung nach dem Verfahren der Reaktionsspritzgusstechnik in geschlossenen Formen. Ebenso bevorzugt in diesem Zusammenhang ist der Verzicht bei der genannten Technik auf eine geschlossene Form, wobei man dann die applikationsfertige Beschichtungsmasse unmittelbar auf geeignete Träger aufträgt und ggf. unter Temperatureinwirkung aushärtet. Diese ausgehärteten Beschichtungen können ggf. im Anschluss durch mechanische Verfahren wie z.B. Polieren nachbearbeitet werden.

Das Verbundbauteil kann beispielsweise aus der thermoplastischen Zusammensetzung vorgefertigt und darauf das erfindungsgemäße Zwei-Komponenten-System aufgebracht und ausreagiert werden. Je nach Reaktivität des Zwei-Komponenten-Systems können die Komponenten A) und B) bereits vorgemischt sein oder während des Auftragens in bekannter Weise vermischt werden. Das Auftragen kann unter anderem durch Sprühen, Rakeln oder Kalandrieren erfolgen. Es ist aber auch möglich, die erfindungsgemäßen Verbundbauteile durch Coextrusion nach bekannten Methoden herzustellen.

In einem weiteren Aspekt der vorliegenden Erfindung wird Verfahren zur Herstellung eines Verbundbauteils bereitgestellt, wobei das Verbundbauteil einen Träger und mindestens eine Beschichtung umfasst, umfassend die Schritte:

(i) Bereitstellen eines Trägers, wobei der Träger eine thermoplastische Zusammensetzung umfasst,
(ii) Aufbringen mindestens des erfindungsgemäßen Zwei-Komponenten-Systems, wobei das Zwei-Komponenten-System in direktem Kontakt mit dem Träger steht und
(iii) Aushärten des Zwei-Komponenten-Systems zu einer Beschichtung.

Dabei wurden die Bevorzugungen des thermoplastischen Trägers bereits oben beschrieben.

Weiterhin ist es bevorzugt, dass dieses Verfahren die Verfahrensschritte (i2) bis (iv2) umfasst, in denen

(i2) in einem ersten Verfahrensschritt die Schmelze einer thermoplastischen Zusammensetzung in eine erste Werkzeugkavität eingespritzt und nachfolgend zu einem Träger abgekühlt wird,
(ii2) in einem zweiten Verfahrensschritt die Kavität des Spritzgusswerkzeugs vergrößert und dadurch ein Spaltraum erzeugt wird,
(iii2) in einem dritten Verfahrensschritt in den so resultierenden Spaltraum des Schritts (ii2) zwischen dem Träger des Verfahrensschritts (i2) und der Werkzeugoberfläche der vergrößerten Kavität das erfindungsgemäße Zwei-Komponenten-System gespritzt wird, wobei das Zwei-Komponenten-System in direktem Kontakt mit der Oberfläche des Trägers ausgehärtet wird, so dass ein Verbundbauteil entsteht und
(iv2) im vierten Verfahrensschritt das Verbundbauteil des Schritts (iii2) aus der Werkzeugkavität entformt wird,

wobei die Verfahrensschritte (i2) bis (iv2) unmittelbar aufeinander folgen.

Durch die unmittelbare Abfolge der Verfahrensschritte wird verhindert, dass die Temperatur des Werkstücks während des Prozesses auf Raumtemperatur abkühlt. Hierdurch wird eine Reduktion der Herstellungszeiten und eine

höhere Energieeffizienz des Gesamtverfahrens erreicht.

Die Verfahrensschritte (ii2) und (iii2) können unter Variation des Zwei-Komponenten-Systems mindestens einmal wiederholt werden, wobei nur auf einer oder beiden Seiten des Trägers ein oder mehrere Beschichtung aufgebracht werden, so dass ein Verbundbauteil aus thermoplastischem Träger und mindestens zwei gleichen oder unterschiedlichen Polyurethankomponenten mit gegebenenfalls auch mehr als zweischichtigem Aufbau resultiert.

Vor dem Entformen des Werkstücks in den Schritten (ii2) und (iv2) wird das Werkstück bis zur Formstabilität abgekühlt.

Zur Erzeugung des Spaltraums in Verfahrensschritt (ii2) kann entweder das Spritzgusswerkzeug geöffnet und nachfolgend eine Hälfte der Spritzgusswerkzeugkavität durch eine neue Hälfte mit größeren Hohlformmaßen ausgetauscht, oder das Bauteil von der ersten Werkzeugkavität in eine zweite, hinsichtlich seiner Hohlformmaße größeren Kavität desselben oder eines zweiten Werkzeugs umgesetzt, oder die erste Kavität um ein Spaltmaß geöffnet werden.

Das Umsetzen des Trägers im Verfahrensschritt (ii2) kann nach bekannten Verfahren, wie sie beispielsweise beim Mehrfarbenspritzgießen angewendet werden, erfolgen. Typische Verfahren sind einerseits das Umsetzen mit Drehteller, Wendeplatte, Schiebekavität oder Indexplatte oder vergleichbare Verfahren, bei denen der Träger auf einem Kern verbleibt. Verbleibt der Träger zum Umsetzen auf dem Kern, hat dies den Vorteil, dass die Lage auch nach dem Umsetzen passgenau definiert ist. Andererseits sind aus dem Stand der Technik Verfahren zum Umsetzen eines Trägers bekannt, bei denen der Träger, z.B. mit Hilfe eines Handhabungssystems, aus einer Kavität entnommen und in eine andere Kavität eingelegt wird. Das Umsetzen mit Entnahme des Trägers bietet größeren Gestaltungsspielraum bei der Beschichtung, z.B. bei der Generierung eines Umbugs oder maskierter Bereiche.

Bevorzugt wird die mit dem Zwei-Komponenten-System in Kontakt stehende Oberfläche des Spritzgusswerkzeuges im Verfahrensschritt (iii2) auf eine Temperatur im Bereich 50 bis 160°C, bevorzugt 70 bis 120°C, weiter bevorzugt 80 bis 110°C, und besonders bevorzugt 90 bis 100 °C temperiert.

Die erfindungsgemäßen Verbundbauteile eignen sich besonders als Innen- oder Außenbauteil eines Schienen-, Luftfahrt- oder Kraftfahrzeuges, für Elektro/Elektronikbauteile und IT Bauteile. Besonders geeignet sind solche Verbundbauteile für Ausbauteile im Fahrzeugbau wie z.B. Armaturenbrett, Displays, Tür- oder sonstige Flächenverkleidungen, Lenkräder oder dergleichen. Daher betrifft die vorliegende Erfindung in einem weiteren Aspekt auch die Verwendung des erfindungsgemäßen Verbundbauteils des gemäß des erfindungsgemäßen Verfahren erhaltenen Verbundbauteils als Innen- oder Außenbauteil eines Schienen-, Luftfahrt- oder Kraftfahrzeugs, für Elektro/Elektronikbauteile und IT Bauteile, bevorzugt für Ausbauteile im Fahrzeugbau wie z.B. Armaturenbrett, Displays, Tür- oder sonstige Flächenverkleidungen, Lenkräder oder dergleichen.

Ein weiterer Aspekt der vorliegenden Erfindung ist die Verwendung mindestens eines polysiloxanhaltigen (Meth)acrylats als Comonomer A3) in einer (Meth)acrylatkomponente A) auf Basis von (Meth)acrylatmonomeren, welche eine Komponente eines Zwei-Komponenten-Systems ist, welches

A) mindestens die (Meth)acrylatkomponente auf Basis von (Meth)acrylatmonomeren, hergestellt durch Umsetzung der (Meth)acryleinheiten mindestens der Komponenten A1), A2) und A3), wobei

A1) mindestens ein Alkylester der (Meth)acrylsäure ist,
A2) mindestens ein Hydroxyalkylester der (Meth)acrylsäure ist, welcher eine primäre Hydroxy-Gruppe aufweist und wobei die Alkylengruppe des Hydroxyalkylesters linear ist und 2 bis 6 Kohlenstoffatome umfasst, und
A3) mindestens ein polysiloxanhaltiges (Meth)acrylat ist,

wobei die Komponente A) ausschließlich primäre Hydroxygruppen und eine Hydroxyzahl von 80 bis 500 mg KOH/g aufweist, und
B) mindestens ein Polyisocyanat umfasst,
wobei die Komponente A) zusätzlich die Komponente C) umfasst, wobei
C) mindestens ein zwei- oder höherwertigen Alkohol und/oder mindestens ein Polyasparaginsäureester ist,

zur Verbesserung der Haftungseigenschaften des Zwei-Komponenten-Systems.

Ebenso betrifft die vorliegende Erfindung die Verwendung eines Polysiloxans, welches mindestens eine gegenüber Polyisocyanatkomponenten reaktive Gruppe aufweist, in einem Zwei-Komponenten-System, umfassend

A) mindestens eine (Meth)acrylatkomponente auf Basis von (Meth)acrylatmonomeren, hergestellt durch Umsetzung der (Meth)acryleinheiten mindestens der Komponenten A1), A2) und gegebenenfalls A3), wobei

A1) mindestens ein Alkylester der (Meth)acrylsäure ist,
A2) mindestens ein Hydroxyalkylester der (Meth)acrylsäure ist, welcher eine primäre Hydroxy-Gruppe aufweist und wobei die Alkylengruppe des Hydroxyalkylesters linear ist und 2 bis 6 Kohlenstoffatome umfasst, und

A3) gegebenenfalls mindestens ein polysiloxanhaltiges (Meth)acrylat ist,

wobei die Komponente A) ausschließlich primäre Hydroxygruppen und eine Hydroxyzahl von 80 bis 500 mg KOH/g aufweist, und
B) mindestens ein Polyisocyanat,
wobei die Komponente A) zusätzlich die Komponente C) umfasst, wobei
C) mindestens ein zwei- oder höherwertigen Alkohol und/oder mindestens ein Polyasparaginsäureester ist,

zur Verbesserung der Haftungseigenschaften des Zwei-Komponenten-Systems.
Dabei ist es bei den oben genannten Verwendungen bevorzugt, dass die Haftungseigenschaften des Zwei-Komponenten-Systems in Bezug auf einen Träger, umfassend mindestens ein Polycarbonat, verbessert werden. In diesen erfindungsgemäßen Verwendungen werden die oben näher und bevorzugt beschriebenen Komponenten bevorzugt eingesetzt.

**Beispiele**

Im Rahmen der vorliegenden Erfindung wurden neben den bereits vorab genannten Messmethoden der OH-Gruppenbestimmung und der Säurezahlbestimmung folgende Methoden verwendet:

a) Viskosität, bestimmt mit Spindelviskosimeter Brookfield LV-DV-I+

Die Bestimmung der Viskositäten erfolgte mittels eines Spindelviskosimeter Typ Brookfield LV-DV-I+. Brookfield-Viskosimeter sind Rotationsviskosimeter mit definierten Spindelsätzen als Rotationskörper. Bei den verwendeten Rotationskörpern handelte es sich um einen LV-Spindelsatz. Aufgrund der Temperaturanhängigkeit der Viskosität wurde die Temperaturen von Viskosimeter und Messflüssigkeit während der Messung auf +/- 0,5 °C genau konstant gehalten. Weitere verwendete Materialien neben dem LV-Spindelsatz waren ein thermostatisierbares Wasserbad, ein Thermometer 0 - 100°C (Skalenteile 1 °C bzw. kleiner) und ein Zeitmessgerät (Skalenwerte nicht größer als 0,1 Sekunden). Zur Messung wurden 100 ml der Probe in eine Weithalsflasche gefüllt; temperiert und luftblasenfrei vermessen, nachdem eine vorherige Kalibrierung erfolgt war. Zur Bestimmung der Viskosität wurde das Viskosimeter so zur Probe positioniert, dass die Spindel bis zur Markierung im Produkt eintaucht. Die Messung wird mit Hilfe der Starttaste ausgelöst, wobei darauf geachtet wurde, dass die Messung im günstigen Messbereich von 50 % (+/- 20 %) des maximal messbaren Drehmoments erfolgte. Das Ergebnis der Messung wurde am Display des Viskosimeters in mPas ausgegeben, wobei die Division durch die Dichte (g/ml) die Viskosität in mm2/s liefert.

b) Pendelhärte nach König

Bei der Pendelhärte Bestimmung nach König (DIN 53157 oder EN ISO 1522 Ausgabe April 2007) dient die Dämpfung eines schwingenden Pendels als Maß. Das Pendel mit zwei Edelstahlkugeln wird auf einen Lackfilm gesetzt. Es besteht eine physikalische Beziehung zwischen Dauer der Pendelschwingung, Amplitude und den geometrischen Abmessungen des Pendels. Das viskoelastische Verhalten der Beschichtung ist ausschlaggebend für die Härte. Wird das Pendel in Schwingung versetzt, rollen die Kugeln auf der Oberfläche und üben somit Druck auf sie aus. Die mehr oder weniger starke Rückfederung hängt von der Elastizität ab. Das Fehlen elastischer Kräfte verursacht eine starke Dämpfung der Pendelbewegung. Hohe elastische Kräfte dagegen verursachen nur eine geringe Dämpfung. Pendelhärte nach "König": Schwingungsanzahl in osc. 1 Oszillation = 1,4 Sekunden.

c) Gitterschnittprüfung

Die Prüfung der Haftung erfolgte mittels Gitterschnitt nach der Norm DIN EN ISO 2409 (Ausgabe August 2007).

d) Kratzbeständigkeit mittels Crockmeter

Die Kratzbeständigkeit mittels Crockmeter erfolgte nach der Norm DIN 55654 (Ausgabe August 2015).

e) Messung der Trübung

Der Haze gemäß der ASTM 1003 (Jahrgang 2011) Norm gemessen. Der $\Delta$Haze wird nach folgender Formel ermittelt:

$$\Delta Haze = Haze\ (Wert\ nach\ Crockmeter) - Haze\ (Ausgangswert)$$

e) Hydrolyselagerung

Die beschichtete Probe wird der Hydrolyselagerung in einem Klimaschrank 72 Stunden bei 90 ± 2 °C und 95 ± 1 % relative Luftfeuchtigkeit unterworfen. Die Haftung der beschichteten Probe wird mittels Gitterschnitt (nach der Norm DIN EN ISO 2409, Ausgabe August 2007) geprüft und mittels Klebebandabriss beurteilt.

f) Glasübergangstemperatur (Tg)

Die Glasübergangstemperatur wird von dem vernetzten Polymerfilm, bestehend aus der Polyolkomponente und dem Polyisocyanathärter nach DIN EN ISO11357-1 (Ausgabe 1997) gemessen. Der Messbereit lag von -50°C bis 150°C mit einer Aufheizrate von 10K/min.

**Beispiel 1 bis 5 und Vergleichsbeispiel 6 (Ausführungsform (a))**

In ein Polymerisationsgefäß mit Tropftrichter, Rührer und Kühlaufsatz wurde das Prozesslösemittel Methyisobutylketon vorgelegt und die Rohstoffe wurden wie in Tabelle 1 angegeben in den Verhältnissen eingesetzt. Im Verlaufe von drei Stunden wurden bei gleichen Temperaturen der Mercapto-funktionelle Regler sowie die (Meth)acrylatmonomere und der Initiator gleichmäßig zu dosiert. Nach beendeter Zugabe wurde noch bei gleicher Temperatur 2 Stunden nachpolymerisiert. Anschließend wurde das Prozesslösemittel destillativ entfernt und die (Meth)acrylatkomponente mit 1,3-Butandiol versetzt.

Tabelle 1

| Rohstoff | Beispiel 1 | Beispiel 2 | Beispiel 3 | Beispiel 4 | Beispiel 5 | Vergleichsbeispiel 6 |
|---|---|---|---|---|---|---|
| Tetrabutylacrylat | 20 | 20 | 20 | 20 | 20 | 20 |
| Hydroxyethylacrylat | 12 | 12 | 12 | 12 | 12 | 12 |
| 4-Hydroxybutylacrylat | 15 | 15 | 15 | 15 | 15 | |
| 2-Hydroxypropylacrylat | | | | | | 13,5 |
| Ethylacrylat | 48 | 43 | 48 | 43 | 51,5 | 53 |
| A3)-1)* | 5 | 10 | | | | |
| A3)-2)** | | | 5 | 10 | 1,5 | 1,5 |
| 1,3-Butandiol | 11 | 11 | 11 | 11 | 18 | 18 |
| Viskosität (mPa*s) | 21.670 | 22.483 | 13.360 | 21.835 | 21.442 | 25.695 |
| OH-Zahl (mg KOH/g) | 258 | 250 | 245 | 244 | 309 | 269 |
| SZ (mg KOH/g) | 7,5 | 0,8 | 0,7 | 0,8 | 1,1 | 1,1 |

* Komponente A3)-1) stellt ein methacrolyl funktionelles Polysiloxan der Formel (I) dar mit $R_1 = C_3H_6$, $R_2 = CH_3$, $R_3 = CH_3$, F = $-O-(C{=}O)-C(CH_3){=}CH_2$ und n = 8 - 9

** Komponente A3)-2) stellt ein ein methacrolyl funktionelles Polysiloxan der Formel (I) dar mit $R_1 = C_3H_6$, $R_2 = CH_3$, $R_3 = CH_3$, F = $-O-(C{=}O)-C(CH_3){=}CH_2$ und n = 27-30

**Beispiel 7, 8 und 13 und Vergleichsbeispiel 9 bis 12 (Ausführungsform (b))**

In ein Polymerisationsgefäß mit Tropftrichter, Rührer und Kühlaufsatz wurde das Prozesslösemittel Methyisobutylketon vorgelegt und die Rohstoffe wurden wie in Tabelle 2 angegeben in den Verhältnissen eingesetzt. Im Verlaufe von drei Stunden wurden bei gleichen Temperaturen der Mercapto-funktionelle Regler sowie die (Meth)acrylatmonomere und der Initiator gleichmäßig zu dosiert. Nach beendeter Zugabe wurde noch bei gleicher Temperatur 2 Stunden nachpolymerisiert. Anschließend wurde das Prozesslösemittel destillativ entfernt und das Bindemittel mit dem jeweiligem funktionalisiertem Polydimetylsiloxan D) und 1,3-Butandiol versetzt.

Tabelle 2

| Rohstoff | Beispiel 7 | Beispiel 8 | Vergleichsbeispiel 9 | Vergleichsbeispiel 10 | Vergleichsbeispiel 11 | Vergleichsbeispiel 12 | Beispiel 13 |
|---|---|---|---|---|---|---|---|
| Tetrabutylacryla t | 20 | 20 | 20 | 20 | 20 | 20 | 20 |
| Hydroxyethylacrylat | 12 | 12 | | | 12 | 12 | 12 |
| 4-Hydroxybutylacrylat | 15 | 15 | 15 | 15 | | | 15 |
| 2-Hydroxypropylacrylat | | | 13,5 | 13,5 | 13,5 | 13,5 | |
| Ethyl acryl at | 53 | 53 | 51,5 | 51,5 | 54,5 | 54,5 | 53 |
| D)-1)* | 0,5 | 1,0 | 0,5 | 1,0 | 0,5 | 1,0 | |
| D)-2)** | | | | | | | 1,5 |
| 1,3-Butandiol | 11 | 11 | 18 | 18 | 18 | 18 | 11 |
| Viskosität (mPa*s) | 20.847 | 20.500 | 19.400 | 20.300 | 27.644 | 19.400 | 20.600 |
| OH-Zahl (mg KOH/g) | 245 | 245 | 301 | 302 | 301 | 301 | 245 |
| SZ (mg KOH/g) | 0,9 | 1,0 | 0,8 | 0,9 | 0,5 | 0,8 | 1,0 |

* Komponente D)-1) stellt ein alpha-omega-organomodihziertes difunktionelles Siloxan der Formel (II) dar mit $R_1 = C_3H_6$, $R_2 = CH_3$, undG = $-OC_2H_4OH$ mit n = 8 - 10.

** Komponente D)-2) stellt ein alpha-omega-organomodifiziertes difunktionelles Siloxan der Formel (II) dar mit $R_1 = C_3H_6$, $R_2 = CH_3$ G = $C_6H_{13}N$und n = 30

**Vergleichsbeispiel 14**

In ein Polymerisationsgefäß mit Tropftrichter, Rührer und Kühlaufsatz wurde das Prozesslösemittel Methyisobutylketon vorgelegt und im Verlaufe von drei Stunden wurden in zwei separaten Tropftrichtern einmal die Monomere 20g Tetrabutylacrylat, 12g Hydroxyethyacrylat, 15g 4-Hydroxybutylacrylat, 53g Ethylacrylat sowie der Initiator und in einem 2. Tropftrichter der Mercapto-funktionelle Regler bei gleicher Temperatur gleichmäßig zu dosiert. Nach beendeter Zugabe wurde noch bei gleicher Temperatur 2 Stunden nachpolymerisiert. Anschließend wurde das Prozesslösemittel destillativ entfernt und das Bindemittel mit 11g 1,3-Butandiol versetzt.

Viskosität: 20.845 mPa*s

OH-Zahl: 244 mgKOH/g

Säurezahl: 0,9 mgKOH/g

**Herstellung einer Beschichtung Beispiel 15**

Aus den entsprechenden Komponenten A) aus den Beispielen und Vergleichsbeispielen 1 und 14 wurde wie nachstehend ein Klarlack (Tabelle 3) hergestellt. Als Vergleich 1 dient ein verzweigtes Polyesterpolyol basierend auf den Polyesterbausteinen Isophthalsäure und Adipinsäure umgesetzt mit di- und trifunktionellen Alkoholen für In-Mold-Coatings sowie das nichtsiloxanmodifizierte Vergleichsbindemittel aus Beispiel 14.

Tabelle 3

| Rohstoff | V15-1 | 15-2 | 15-3 | 15-4 | 15-5 | 15-6 | V15-7 | 15-8 | 15-9 | V15-10 | V15-11 | V15-12 | V15-13 | V15-14 | 15-15 |
|---|---|---|---|---|---|---|---|---|---|---|---|---|---|---|---|
| Vergleich 1 | 99 | | | | | | | | | | | | | | |
| Vergleichsbeispiel 14 | | | | | | | | | | | | | | 99 | |
| Bsp.-1 | | 99 | | | | | | | | | | | | | |
| Bsp.-2 | | | 99 | | | | | | | | | | | | |
| Bsp.-3 | | | | 99 | | | | | | | | | | | |
| Bsp.-4 | | | | | 99 | | | | | | | | | | |
| Bsp.-5 | | | | | | 99 | | | | | | | | | |
| Vergleichsbsp.-6 | | | | | | | 99 | | | | | | | | |
| Bsp.-7 | | | | | | | | 99 | | | | | | | |
| Bsp.-8 | | | | | | | | | 99 | | | | | | |
| Vergleichsbsp.-9 | | | | | | | | | | 99 | | | | | |
| Vergleichsbsp.-10 | | | | | | | | | | | 99 | | | | |
| Vergleichsbsp.-11 | | | | | | | | | | | | 99 | | | |
| Vergleichsbsp.-12 | | | | | | | | | | | | | 99 | | |
| Bsp.-13 | | | | | | | | | | | | | | | 99 |
| Tib kat 218 (1) | 0,02 | 0,02 | 0,02 | 0,02 | 0,02 | 0,02 | 0,02 | 0,02 | 0,02 | 0,02 | 0,02 | 0,02 | 0,02 | 0,02 | 0,02 |
| Tego Wet 260 (2) | 0,1 | 0,1 | 0,1 | 0,1 | 0,1 | 0,1 | 0,1 | 0,1 | 0,1 | 0,1 | 0,1 | 0,1 | 0,1 | 0,1 | 0,1 |
| B) (3) | 174 | 80 | 80 | 80 | 80 | 100,5 | 100,5 | 79,2 | 79 | 97,6 | 97,3 | 97,6 | 97,6 | 79 | 79 |

(1) Tego Wet 260 ist ein Substartnetzadditiv der Fa. Evonik Industries AG (Polyethersiloxan-Copolymer)
(2) Tib Kat 218 ist ein Katalysator der Fa. Tib Chemicals (Dibutylzinndilaurat)
(3) Komponente B): aliphatisches HDI-Trimerisat

Die Beschichtungen aus Beispiel 15 wurden auf eine 3,2mm Polycarbonatplatte (Bisphenol A Polycarbonat) mit einer visuellen Transparenz von $T_{VIS}$ von 88%, mit einem MVR von ca. 19 $cm^3$/(10 min), gemessen bei 300 °C und 1,2 kg Belastung (gemäß ISO 1133-1:2012-03), der Firma Covestro Deutschland AG mit einer Trockenschichtdicke von ca. 120 μm mittels Rakel appliziert. Anschließend wurde der Lack 60 Minuten bei 120°C im Umluftrockenofen gehärtet.

Anschließend wurden Pendelhärten nach König, Kratzbeständigkeit mittels Crockmeter, und die Haftung nach Hydrolyselagerung bewertet. In Tabelle 4 sind die Prüfergebnisse zusammengefasst.

Tabelle 4

| Beschichtung | Pendelhärte nach König in sec. | Glasübergangstemperatur ausgehärteter Lackfilm in °C | Crockmeter 2000 Hübe, 22,5N ΔHaze | Haftung nach Hydrolyselagerung |
|---|---|---|---|---|
| V15-1 | 124 | 58-60 | 0,1 | GT 5 (komplette Ablösung des Lackfilms vom Substrat) |
| 15-2 | 79 | | 0 | GT 2 |
| 15-3 | 69 | | 0 | GT 0 |
| 15-4 | 94 | | 0 | GT 0 |
| 15-5 | 48 | 36-40 | 0 | GT 0 |
| 15-6 | 81 | | 0,53 | GT 3 |
| V15-7 | 69 | 28 - 30 | 0,1 | GT 5 (komplette Ablösung des Lackfilms vom Substrat) |
| 15-8 | 106 | 30 - 31 | 0 | GT 0 |
| 15-9 | 76 | | 0,2 | GT 1 |
| V15-10 | 114 | | 1,8 | GT 5 (komplette Ablösung des Lackfilms vom Substrat) |
| V15-11 | 115 | | 0,2 | GT 4 |
| V15-12 | 85 | | 0,2 | GT 4 |
| V15-13 | 87 | | 0,5 | GT 5 |
| V15-14 | 80 | 18 -22 | 44 | GT 5 (komplette Ablösung des Lackfilms vom Substrat) |
| 15-15 | 68 | | 0,5 | GT 0 |

Wie den Ergebnissen der Tabelle entnommen werden kann, führt der Zusatz einer Siloxankomponente allein (V15-7) oder aber auch die Anwesenheit von primären Hydroxygruppen in Komponente A) allein (V15-14) nicht zu einer ausreichenden Haftung gegenüber dem Träger. Nur durch die Kombination der Zugabe einer Siloxankomponente und die ausschließliche Anwesenheit primärer Hydroxygruppen in Komponente A) zu guten Haftungseigenschaften (15-2 bis 15-6 und 15-8, 15-9 und 15-15).

Weiterhin wurde wie in Tabelle 5 angegeben, die Beständigkeit gegen Hand- und Sonnencreme sowie gegen Aceton und Butylacetat als Lösemittel geprüft.

Bei der Cremebeständigkeit wurde jeweils eine mit Hand- und Sonnencreme versehene Mullbinde auf die Oberfläche der Beschichtung gegeben und anschließend 24 Stunden bei 80°C im Umluftofen belastet. Anschließend wurde der Angriff der Lackoberfläche visuell beurteilt.

Bei der Beständigkeit gegen Lösemittel wurde ein getränkter Wattebausch auf die Oberfläche der Beschichtung gegeben und der Angriff der Lackoberfläche visuell nach 1, 5, 15, 30 und 60 Minuten visuell beurteilt.

Tabelle 5

| Beschichtung | Handcreme 24h 80°C. | Sonnencreme 24h 80°C | Aceton 1,5,15,30,60 min | Butylacetat 1,5,15,30,60 min |
|---|---|---|---|---|
| V15-1 | 1 | 2 | 1 / 2 / 2 / 2 / 2 | 1 / 1 / 1 / 2 / 2 |
| 15-2 | 1 | 2 | 1 / 2 / 3 / 3 / 3 | 1 / 1 / 1 / 2 / 2 |

(fortgesetzt)

| Beschichtung | Handcreme 24h 80°C. | Sonnencreme 24h 80°C | Aceton 1, 5,15,30, 60 min | Butylacetat 1,5,15,30,60 min |
|---|---|---|---|---|
| 15-3 | 1 | 2 | 1 / 2 / 3 / 3 / 3 | 1 / 1 / 1 / 2 / 2 |
| 15-4 | 1 | 2 | 1 / 2 / 3 / 3 / 3 | 1 / 1 / 1 / 2 / 2 |
| 15-5 | 1 | 1 | 1 / 2 / 2 / 3 / 3 | 1 / 1 / 1 / 2 / 2 |
| 15-6 | 1 | 1 | 1 / 2 / 2 / 3 / 3 | 1 / 1 / 1 / 2 / 2 |
| V15-7 | 2 | 2 | 1 / 2 / 3 / 3 / 3 | 1 / 1 / 1 / 1 / 1 |
| 15-8 | 2 | 2 | 1 / 2 / 3 / 3 / 3 | 1 / 1 / 1 / 2 / 2 |
| 15-9 | 2 | 1 | 1 / 2 / 3 / 3 / 3 | 1 / 1 / 1 / 2 / 2 |
| V15-10 | 2 | 2 | 1 / 2 / 3 / 3 / 3 | 1 / 1 / 1 / 2 / 2 |
| V15-11 | 2 | 2 | 1 / 2 / 3 / 3 / 3 | 1 / 1 / 1 / 2 / 3 |
| V15-12 | 1 | 2 | 1 / 1 / 1 / 3 / 3 | 1 / 1 / 1 / 1 / 1 |
| V15-13 | 1 | 2 | 1 / 1 / 3 / 3 / 3 | 1 / 1 / 1 / 1 / 1 |
| V15-14 | 1 | 2 | 1 / 1 / 3 / 3 / 3 | 1 / 1 / 1 / 1 / 1 |
| 15-15 | 1 | 2 | 1 / 1 / 3 / 3 / 3 | 1 / 1 / 1 / 1 / 1 |
| Ranking / Bewertung:<br>1 = keine Veränderung der Lackoberfläche<br>2 = leichter Angriff der Lackoberfläche<br>3 = starker Angriff der Lackoberfläche | | | | |

Wie den Ergebnissen aus Tabelle 5 entnommen werden kann, weisen die erfindungsgemäßen Beschichtungen eine gute Haftung bei gleichzeitig guten Beständigkeiten gegenüber Hand- und Sonnencreme sowie gegen Aceton und Butylacetat auf.

## Patentansprüche

**1.** Zwei-Komponenten-System, umfassend die Komponenten A) und B), wobei

A) mindestens eine (Meth)acrylatkomponente auf Basis von (Meth)acrylatmonomeren ist, welche durch Umsetzung der (Meth)acryleinheiten mindestens der Komponenten A1) und A2) hergestellt ist, wobei

A1) mindestens ein Alkylester der (Meth)acrylsäure ist und
A2) mindestens ein Hydroxyalkylester der (Meth)acrylsäure ist, welcher eine primäre Hydroxygruppe aufweist und wobei die Alkylengruppe des Hydroxyalkylesters linear ist und 2 bis 6 Kohlenstoffatome umfasst,

wobei die Komponente A) ausschließlich primäre Hydroxygruppen und eine Hydroxyzahl von 80 bis 500 mg KOH/g aufweist und
B) mindestens ein Polyisocyanat ist,
wobei die Komponente A) zusätzlich die Komponente C) umfasst, wobei
C) mindestens ein zwei- oder höherwertigen Alkohol und/oder mindestens ein Polyasparaginsäureester ist,
**dadurch gekennzeichnet, dass**

(a) die Komponente A) durch Umsetzung der (Meth)acryleinheiten mindestens der Komponenten A1), A2) und A3) hergestellt ist, wobei

A3) mindestens ein polysiloxanhaltiges (Meth)acrylat ist
und / oder
(b) die Komponenten A) zusätzlich die Komponente D) umfasst, wobei

D) ein Polysiloxan ist, welches mindestens eine gegenüber Komponente B) reaktive Gruppe aufweist.

**2.** Zwei-Komponenten-System nach Anspruch 1, **dadurch gekennzeichnet, dass** die Komponenten A) und B) in Summe maximal 3 Gew.-% eines Lösemittels bezogen auf das Gesamtgewicht des Zwei-Komponenten-Systems enthalten.

**3.** Zwei-Komponenten-System nach Anspruch 1 oder 2, **dadurch gekennzeichnet, dass** die Komponente A) hergestellt ist durch Umsetzung der (Meth)acryleinheiten mindestens der Komponenten A1) und A2), wobei

A1) mindestens zwei voneinander unterschiedliche Alkylester der (Meth)acrylsäure sind und
A2) mindestens zwei voneinander unterschiedliche Hydroxyalkylester der (Meth)acrylsäure sind, welche jeweils eine primäre Hydroxy-Gruppe aufweisen und wobei die Alkylengruppen der Hydroxyalkylester jeweils linear sind und 2 bis 6 Kohlenstoffatome umfassen.

**4.** Zwei-Komponenten-System nach Anspruch 3, **dadurch gekennzeichnet, dass** die Komponente A2) mindestens zwei voneinander unterschiedliche Hydroxyalkylester umfasst und davon die eine Alkylengruppen des einen Hydroxyalkylesters 2 oder 3 Kohlenstoffatome umfasst und die Alkylengruppe des mindestens einen anderen Hydroxyalkylesters 4 oder 5 Kohlenstoffatome umfasst.

**5.** Zwei-Komponenten-System nach einem der Ansprüche 1 bis 4, **dadurch gekennzeichnet, dass** das mindestens eine polysiloxanhaltiges (Meth)acrylat A3) dargestellt wird durch die Formel (I)

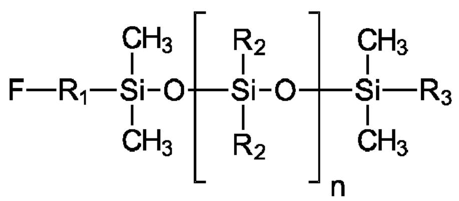

(I),

in der $R_1$ für eine Alkylengruppe steht,
$R_2$ jeweils unabhängig voneinander für eine Alkyl- oder Arylgruppe steht,
$R_3$ für eine Alkylgruppe steht,
F für eine Acryloxy oder Methacryloxygruppe steht und
n die mittlere Anzahl an Wiederholungseinheiten darstellt und zwischen 1 bis 70 liegt.

**6.** Zwei-Komponenten-System nach einem der Ansprüche 1 bis 5, **dadurch gekennzeichnet, dass** das Polysiloxan der Komponente D), dargestellt wird durch die Formel (II)

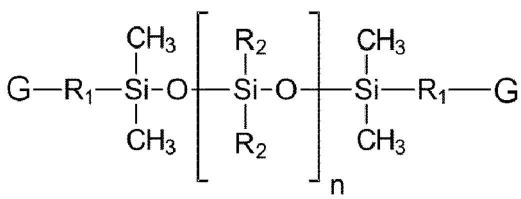

(II),

in der $R_1$ jeweils unabhängig voneinander für eine Alkylengruppe steht,
$R_2$ jeweils unabhängig voneinander für eine Alkyl- oder Arylgruppe steht,
G jeweils unabhängig voneinander für eine Amino-, Mercapto-, Hydroxy- oder Hydroxy-Polyethergruppe steht und
n die mittlere Anzahl an Wiederholungseinheiten darstellt und zwischen 1 bis 50 liegt.

**7.** Zwei-Komponenten-System nach einem der Ansprüche 1 bis 6, **dadurch gekennzeichnet, dass** das mindestens

eine Polyisocyanat der Komponente B) ausgewählt wird aus der Gruppe, bestehend aus aromatischen, araliphatischen, aliphatischen und cycloaliphatischen Polyisocyanaten, welche gegebenenfalls Iminooxadiazindion-, Isocyanurat-, Uretdion-, Urethan-, Allophanat-, Biuret-, Harnstoff-, Oxadiazintrion, Oxazolidinon-, Acylharnstoff- und/oder Carbodiimid-Strukturen aufweisen.

**8.** Verbundbauteil, umfassend einen Träger und mindestens eine Beschichtung, welche in direktem Kontakt mit dem Substrat steht,
wobei das Substrat eine thermoplastische Zusammensetzung umfasst und
die Beschichtung erhalten wird durch Aushärtung des Zwei-Komponenten-Systems nach einem der Ansprüche 1 bis 7.

**9.** Verbundbauteil nach Anspruch 8, **dadurch gekennzeichnet, dass** die thermoplastische Zusammensetzung des Substrats mindestens ein Polycarbonat umfasst.

**10.** Verfahren zur Herstellung eines Verbundbauteils, umfassen einen Träger und mindestens eine Beschichtung, umfassend die Schritte:

(i) Bereitstellen eines Trägers, wobei der Träger eine thermoplastische Zusammensetzung umfasst,
(ii) Aufbringen mindestens des Zwei-Komponenten-Systems nach einem der Ansprüche 1 bis 7, wobei das Zwei-Komponenten-System in direktem Kontakt mit dem Träger steht und
(iii) Aushärten des Zwei-Komponenten-Systems zu einer Beschichtung.

**11.** Verfahren nach Anspruch 10, umfassend die Verfahrensschritte (i2) bis (iv2), in denen

(i2) in einem ersten Verfahrensschritt die Schmelze einer thermoplastischen Zusammensetzung in eine erste Werkzeugkavität eingespritzt und nachfolgend zu einem Träger abgekühlt wird,
(ii2) in einem zweiten Verfahrensschritt die Kavität des Spritzgusswerkzeugs vergrößert und dadurch ein Spaltraum erzeugt wird,
(iii2) in einem dritten Verfahrensschritt in den so resultierenden Spaltraum des Schritts (ii2) zwischen dem Träger des Verfahrensschritts (i2) und der Werkzeugoberfläche der vergrößerten Kavität das Zwei-Komponenten-System nach einem der Ansprüche 1 bis 7 gespritzt wird, wobei das Zwei-Komponenten-System nach einem der Ansprüche 1 bis 7 in direktem Kontakt mit der Oberfläche des Trägers ausgehärtet wird, so dass ein Verbundbauteil entsteht und
(iv2) im vierten Verfahrensschritt das Verbundbauteil des Schritts (iii2) aus der Werkzeugkavität entformt wird,

wobei die Verfahrensschritte (i2) bis (iv2) unmittelbar aufeinander folgen.

**12.** Verwendung eines Verbundbauteils nach einem der Ansprüche 8 oder 9 oder des gemäß Anspruch 10 oder 11 erhaltenen Verbundbauteils als Innen- oder Außenbauteil eines Schienen-, Luftfahrt- oder Kraftfahrzeugs, für Elektro/Elektronikbauteile und IT Bauteile.

**13.** Verwendung mindestens eines polysiloxanhaltigen (Meth)acrylats als Comonomer A3) in einer (Meth)acrylatkomponente A) auf Basis von (Meth)acrylatmonomeren, welche eine Komponente eines Zwei-Komponenten-Systems ist, welches

A) mindestens die (Meth)acrylatkomponente auf Basis von (Meth)acrylatmonomeren, hergestellt durch Umsetzung der (Meth)acryleinheiten mindestens der Komponenten A1), A2) und A3), wobei

A1) mindestens ein Alkylester der (Meth)acrylsäure ist,
A2) mindestens ein Hydroxyalkylester der (Meth)acrylsäure ist, welcher eine primäre Hydroxy-Gruppe aufweist und wobei die Alkylengruppe des Hydroxyalkylesters linear ist und 2 bis 6 Kohlenstoffatome umfasst, und
A3) mindestens ein polysiloxanhaltiges (Meth)acrylat ist,

wobei die Komponente A) ausschließlich primäre Hydroxygruppen und eine Hydroxyzahl von 80 bis 500 mg KOH/g aufweist, und
B) mindestens ein Polyisocyanat umfasst,
wobei die Komponente A) zusätzlich die Komponente C) umfasst, wobei

C) mindestens ein zwei- oder höherwertigen Alkohol und/oder mindestens ein Polyasparaginsäureester ist,

zur Verbesserung der Haftungseigenschaften des Zwei-Komponenten-Systems.

**14.** Verwendung eines Polysiloxans, welches mindestens eine gegenüber Polyisocyanatkomponenten reaktive Gruppe aufweist, in einem Zwei-Komponenten-System, umfassend

A) mindestens eine (Meth)acrylatkomponente auf Basis von (Meth)acrylatmonomeren, hergestellt durch Umsetzung der (Meth)acryleinheiten mindestens der Komponenten A1), A2) und gegebenenfalls A3), wobei

A1) mindestens ein Alkylester der (Meth)acrylsäure ist,
A2) mindestens ein Hydroxyalkylester der (Meth)acrylsäure ist, welcher eine primäre Hydroxy-Gruppe aufweist und wobei die Alkylengruppe des Hydroxyalkylesters linear ist und 2 bis 6 Kohlenstoffatome umfasst, und
A3) gegebenenfalls mindestens ein polysiloxanhaltiges (Meth)acrylat ist,

wobei die Komponente A) ausschließlich primäre Hydroxygruppen und eine Hydroxyzahl von 80 bis 500 mg KOH/g aufweist, und
B) mindestens ein Polyisocyanat,
wobei die Komponente A) zusätzlich die Komponente C) umfasst, wobei
C) mindestens ein zwei- oder höherwertigen Alkohol und/oder mindestens ein Polyasparaginsäureester ist,

zur Verbesserung der Haftungseigenschaften des Zwei-Komponenten-Systems.

**15.** Verwendung nach Anspruch 13 oder Anspruch 14, wobei die Haftungseigenschaften des Zwei-Komponenten-Systems in Bezug auf einen Träger, umfassend mindestens ein Polycarbonat, verbessert werden.

Europäisches Patentamt
European Patent Office
Office européen des brevets

# EUROPÄISCHER RECHERCHENBERICHT

Nummer der Anmeldung
EP 18 16 5622

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| Y | US 5 519 089 A (OKAMOTO YOSHIHIRO [JP] ET AL) 21. Mai 1996 (1996-05-21)<br>* Spalte 1, Zeilen 9-12 *<br>* Spalte 1, Zeile 60 - Spalte 2, Zeile 12 *<br>* Spalte 2, Zeilen 31-36 *<br>* Beispiel 2; Tabellen 1,2 *<br>* Spalte 8, Zeilen 21-39 *<br>* Spalte 10, Zeilen 29-53 *<br>* Spalte 14, Zeilen 50-55 *<br>----- | 1-15 | INV.<br>C09D133/06<br>C08G18/61<br>C08G18/62<br>C09D175/04<br>C08G18/40 |
| Y | US 5 346 958 A (YUKAWA YOSHIYUKI [JP] ET AL) 13. September 1994 (1994-09-13)<br>* Beispiele 4,7,9,13; Tabellen 1,2 *<br>----- | 1-15 | |
| Y | US 6 001 947 A (BRUENNEMANN MICHAEL [DE] ET AL) 14. Dezember 1999 (1999-12-14)<br>* Spalte 1, Zeilen 5-10 *<br>* Spalte 3, Zeilen 55-58 *<br>* Beispiele 1-3; Tabellen 1,2 *<br>* Spalte 7, Zeilen 10-20 *<br>* Spalte 8, Zeilen 23-52 *<br>* Spalte 11, Zeilen 13-26 *<br>----- | 1-15 | RECHERCHIERTE SACHGEBIETE (IPC)<br>C09D<br>C08G<br>C08F |
| Y | US 2018/016381 A1 (HOFFMANN PETER [DE] ET AL) 18. Januar 2018 (2018-01-18)<br>* Absätze [0065], [0066], [0159] *<br>----- | 1-15 | |
| Y | EP 1 484 349 A2 (HONDA MOTOR CO LTD [JP]; NIPPON BEE CHEMICAL CO LTD [JP]) 8. Dezember 2004 (2004-12-08)<br>* Spalte 1, Zeilen 44-54 *<br>----- | 1-15 | |
| Y | US 5 710 201 A (HAYAKAWA TAKESHI [JP] ET AL) 20. Januar 1998 (1998-01-20)<br>* Absätze [0015], [0064], [0070], [0073], [0079], [0080] *<br>----- | 1-15 | |

Der vorliegende Recherchenbericht wurde für alle Patentansprüche erstellt

3

| Recherchenort | Abschlußdatum der Recherche | Prüfer |
|---|---|---|
| Den Haag | 31. Juli 2018 | Dessemond, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 18 16 5622

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-07-2018

| Im Recherchenbericht angeführtes Patentdokument | Datum der Veröffentlichung | Mitglied(er) der Patentfamilie | Datum der Veröffentlichung |
|---|---|---|---|
| US 5519089 A | 21-05-1996 | DE 69506591 D1 | 28-01-1999 |
| | | DE 69506591 T2 | 06-05-1999 |
| | | EP 0665252 A2 | 02-08-1995 |
| | | JP 3376567 B2 | 10-02-2003 |
| | | JP H07216301 A | 15-08-1995 |
| | | US 5519089 A | 21-05-1996 |
| US 5346958 A | 13-09-1994 | AU 3701093 A | 21-10-1993 |
| | | CA 2094320 A1 | 21-10-1993 |
| | | EP 0567039 A2 | 27-10-1993 |
| | | JP 3099099 B2 | 16-10-2000 |
| | | JP H05295322 A | 09-11-1993 |
| | | US 5346958 A | 13-09-1994 |
| US 6001947 A | 14-12-1999 | AT 185359 T | 15-10-1999 |
| | | AU 710473 B2 | 23-09-1999 |
| | | BR 9608690 A | 06-07-1999 |
| | | DE 19519807 A1 | 13-02-1997 |
| | | EP 0828776 A1 | 18-03-1998 |
| | | ES 2140094 T3 | 16-02-2000 |
| | | JP H11505881 A | 25-05-1999 |
| | | US 6001947 A | 14-12-1999 |
| | | WO 9638490 A1 | 05-12-1996 |
| | | ZA 9604039 B | 06-02-1997 |
| US 2018016381 A1 | 18-01-2018 | CN 107207698 A | 26-09-2017 |
| | | EP 3247757 A1 | 29-11-2017 |
| | | JP 2018509490 A | 05-04-2018 |
| | | KR 20170101246 A | 05-09-2017 |
| | | US 2018016381 A1 | 18-01-2018 |
| | | WO 2016120160 A1 | 04-08-2016 |
| EP 1484349 A2 | 08-12-2004 | EP 1484349 A2 | 08-12-2004 |
| | | EP 1834973 A1 | 19-09-2007 |
| | | JP 4451080 B2 | 14-04-2010 |
| | | JP 2004359824 A | 24-12-2004 |
| | | US 2005009983 A1 | 13-01-2005 |
| US 5710201 A | 20-01-1998 | AT 152163 T | 15-05-1997 |
| | | BR 9306843 A | 08-12-1998 |
| | | CA 2140634 A1 | 17-02-1994 |
| | | DE 69310181 D1 | 28-05-1997 |
| | | DE 69310181 T2 | 11-12-1997 |
| | | DK 0654069 T3 | 03-11-1997 |
| | | EP 0654069 A1 | 24-05-1995 |
| | | ES 2105300 T3 | 16-10-1997 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR.

EP 18 16 5622

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-07-2018

| Im Recherchenbericht angeführtes Patentdokument | Datum der Veröffentlichung | Mitglied(er) der Patentfamilie | Datum der Veröffentlichung |
|---|---|---|---|
| | | JP H0657175 A | 01-03-1994 |
| | | US 5710201 A | 20-01-1998 |
| | | WO 9403547 A1 | 17-02-1994 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0943637 A1
- EP 1484350 A2
- EP 0693512 A1
- EP 0006517 A1
- EP 1247823 A2
- WO 2015039837 A1
- EP 0550259 A1
- WO 2015055719 A1
- US 20110159292 A1
- WO 2004000905 A